# EUROPÄISCHE PATENTANMELDUNG

(11) **EP 1 760 650 A1**
(43) Veröffentlichungstag der Anmeldung: **07.03.2007**
(21) Anmeldenummer: 05017809.4
(22) Anmeldetag: 17.08.2005
(51) Int. Cl.: G06Q 30/00

(54) **Verfahren und Anordnung von Vorrichtungen zum Betrieb eines computergestützten Filialsystems**

(71) Anmelder: Deutsche Post AG, 53113 Bonn (DE)
(72) Erfinder: Kranz, Jürgen, 50374 Erfstadt (DE); Rao, Roberto Dr., 61169 Friedberg (DE)
(74) Vertreter: Jostarndt, Hans-Dieter

(57) **Zusammenfassung**

Die Erfindung betrifft ein Verfahren und eine Anordnung von Vorrichtungen zum Betrieb eines computergestützten Filialsystems, wobei ein Frontend des Filialsystems mehrere Clients (10) umfasst, während ein Backend wenigstens durch mehrere Servicekomponenten (40) gebildet wird. Die Clients (10), die Servicekomponenten (40) und ein oder mehrere Umsysteme sind über eine Kommunikationskomponente (20) miteinander verbunden. Zu den Servicekomponenten (40) zählen wenigstens eine Rohdatenkomponente (42) zur Filterung von an den Clients (10) erzeugten Rohdaten und zur Übermittlung der gefilterten Rohdaten an Umsysteme (30), eine Archivkomponente (43) zur Archivierung von Daten in einem Archiv (33), eine Prozesskomponente (44) zur Verarbeitung von statusbehafteten Aufrufen der Clients (10) und eine Dialogkomponente (45) zur Verarbeitung von statuslosen Aufrufen der Clients (10). Dabei übernimmt eine Routing-Komponente (23) die Nachrichtenübermittlung im und zum Backend.

## Beschreibung

Die Erfindung betrifft ein Verfahren und eine Anordnung von Vorrichtungen zum Betrieb eines computergestützten Filialsystems, wobei ein Frontend des Filialsystems mehrere Clients umfasst, während ein Backend wenigstens durch mehrere Servicekomponenten gebildet wird. Die Clients sind über eine Kommunikationskomponente mit den Servicekomponenten des Backends und einem oder mehreren Umsystemen verbunden. Dabei ist die Kommunikationskomponente funktional in wenigstens zwei Bereiche aufgeteilt, wobei ein erstes Modul dem Client im Frontend zuzuordnen ist, während ein zweites Modul dem Backend zuzuordnen ist.

Gegenwärtig gibt es eine ganze Reihe von Geschäftsfeldern, die ein weit verzweigtes Filial- oder Automatensystem umfassen, um Kunden einen flächendeckenden Zugang zu verschiedenen Dienstleistungen eines Unternehmens zu ermöglichen. Beispielhaft können dazu Verkehrsunternehmen genannt werden, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen.

Ein anderes Beispiel stellen Postunternehmen dar, die in fast jedem Ort in einem Land den Kunden eine umfangreiche Auswahl von Postdienstleistungen zur Verfügung stellen, wie zum Beispiel die Annahme von Briefen und Paketen, den Verkauf von Postwertzeichen sowie eine ganze Palette von Bankdienstleistungen. Ferner werden in Filialen Dienstleistungen im Bereich der Telekommunikation angeboten, wie es beispielsweise durch den Abschluss eines Mobiltelefonvertrags gegeben ist. Die genannten Dienstleistungen werden dabei nicht nur in eigenen Filialen des Postunternehmens, sondern auch an Automaten, bei Servicepartnern oder über Internetauftritte angeboten und die Gesamtheit der an ein Netzwerk angeschlossenen Frontendstellen wird im Folgenden zur Vereinfachung als Filialsystem bezeichnet.

Üblicherweise werden die Verkaufs- und Beratungsdienstleistungen aus Gründen der Kosteneffizienz und Sicherheit durch Informationstechnik unterstützt. Die Abbildung von Geschäftsprozessen in einem Filialsystem erfordert jedoch einen hohen informationstechnischen Aufwand und üblicherweise wird das Filialsystem durch eine Vielzahl von Clients gebildet, die über ein Netzwerk mit einem zentralen Verwaltungssystem verbunden sind.

In einem derartigen Filialsystem müssen eine Vielzahl von Vorgängen abgewickelt werden, bei denen Daten übertragen, verändert und/oder gespeichert werden. Dabei hat es sich als zweckmäßig erwiesen, dass die Aufbereitung und Weiterleitung von Daten schwerpunktmäßig im so genannten Filialbackend durchgeführt wird. Das Backend kann verschiedenste Aufgaben erfüllen, zu denen beispielsweise die Aufbereitung von Rohdaten gehört, welche an den Clients im Frontend erzeugt wurden. Die Daten können nach vorgegebenen Kriterien aufbereitet und an verschiedene weitere Komponenten übermittelt werden.

Neben der Übermittlung von Rohdaten von den Frontends zu Umsystemen muss ebenso eine Bereitstellung von Stammdaten der Umsysteme an den Clients erfolgen. Diese Stammdatenbereitstellung kann die Übermittlung von Daten und/oder Strukturen beinhalten. Bei allen Prozessen kann das Backend weiterzuleitende Daten beispielsweise prüfen, aufbereiten, korrigieren und archivieren. Davon ist die Umwandlung in verschiedene Formate ebenso umfasst wie die Aufbereitung der Daten nach vorgegebenen Kriterien. Ferner sollte es das System ermöglichen, dass buchungsrelevante Daten nach den Grundsätzen der ordnungsmäßigen Buchführung (GoB) und den Grundsätzen der ordnungsmäßigen DV-gestützten Buchführungssysteme (GoBS) verarbeitet werden. Dies schließt eine ordnungsgemäße Archivierung der Daten über vorgeschriebene Zeiträume ein.

Es besteht daher ein Bedarf nach einem computergestützten System zum Betrieb eines Filialsystems mit mehreren Clients und Umsystemen, bei dem in einem als Backend zu bezeichnenden Bereich des Systems eine Aufbereitung, Verarbeitung und/oder Weiterleitung von Daten nach den spezifischen Anforderungen des Filialsystems stattfindet.

Bei der Realisierung von komplexen Computersystemen, bei denen verschiedene Funktionen und Dienste bereitgestellt werden müssen, hat es sich als zweckmäßig erwiesen, diese nach dem SOA-Prinzip der Service-Orientierten Architektur auszuführen. Beispielsweise beschreibt die US-Patentanmeldung US 2005/0093381 A1 ein SOA-System, das von mehreren Einheiten über Web-Services nutzbar ist. Eine mehrschichtige Anpassbarkeit wird durch Prinzipien eines Service-Orientierten Designs (SOD) ermöglicht, das eine Ereignis-gesteuerte Architektur, asynchrone Systeme, lose aneinander gefügte Services und mehrere Clients beinhaltet.

Aufgabe der Erfindung ist es, eine Anordnung von Vorrichtungen zum Betrieb eines Backends eines computergestützten Filialsystems bereitzustellen, das die erforderlichen Funktionalitäten zum Betrieb eines Retailsystems umfasst. Dabei sollen insbesondere Prinzipien einer Service-Orientierten-Architektur berücksichtigt werden und die Anordnung soll sich zum Betrieb eines Filialsystems eignen, in dem beispielsweise Dienstleistungen von Post- und/oder Transportunternehmen angeboten werden.

Aufgabe der Erfindung ist es ferner, ein Verfahren zum Betrieb eines Backends eines Filialsystems bereitzustellen, bei dem Abläufe in einer Service-Orientierten-Architektur durchgeführt werden.

Erfindungsgemäß wird diese Aufgabe durch eine Anordnung von Vorrichtungen mit den Merkmalen des unabhängigen Anspruchs 1 gelöst. Vorteilhafte Weiterbildungen der Anordnung ergeben sich aus den Unteransprüchen 2-9. Die Aufgabe wird ferner durch ein Verfahren nach Anspruch 10 gelöst. Vorteilhafte Ausführungsformen des Verfahrens ergeben sich aus den Unteransprüchen 11-17.

Die Erfindung umfasst eine Anordnung von Vorrichtungen gemäß dem Oberbegriff des Anspruchs 1, bei dem das zweite Modul einer Kommunikationskomponente eine Routing-Komponente umfasst, welche Mittel zur Nachrichtenübermittlung zwischen mehreren Servicekomponenten des Backends aufweist. Zu den Servicekomponenten zählen erfindungsgemäß wenigstens eine Rohdatenkomponente zur Filterung von an den Clients erzeugten Rohdaten und zur Übermittlung der gefilterten Rohdaten an Umsysteme, eine Archivkomponente zur Archivierung von Daten in einem Archiv, eine Prozesskomponente zur Verarbeitung von statusbehafteten Prozessen der Clients und eine Dialogkomponente zur Verarbeitung von statuslosen Aufrufen der Clients. Die Anordnung kann ergänzt werden durch eine Datenbereitstellungskomponente zur Bereitstellung von Daten der Umsysteme für die Clients.

In einem besonders bevorzugten Ausführungsbeispiel der Erfindung setzt sich das Archiv aus einem Kurzzeitarchiv in Form einer Datenbank und einem Langzeitarchiv in Form eines CAS-basierten Datenspeichersystems zusammen. Bei dem Langzeitarchiv handelt es sich beispielsweise um ein CAS-basiertes Festplattensystem, welches sich zur Archivierung von Daten gemäß den Grundsätzen ordnungsmäßiger Buchführung (GoB) eignet. Die Anordnung umfasst ferner einen Recherche-Client, der wenigstens auf Daten des Archivs zugreifen kann. Vorzugsweise greift ein Recherche-Client bei der Abfrage von Daten über einen Web-Service auf die Dialogkomponente zu, welche den Aufruf an die Archivkomponente weiterleitet.

In einem besonders bevorzugten Ausführungsbeispiel verfügen die Servicekomponenten jeweils über eine Schnittstelle zur Kommunikationskomponente, über welche jegliche Kommunikation mit dem zweiten Modul der Kommunikationskomponente abgewickelt wird. Die Servicekomponenten können ferner eine Daten verarbeitende Komponente (Active Message Handler - AMH) zur Abholung von Nachrichten an der Schnittstelle und zur Einbringung in die jeweilige Servicekomponente verfügen. Ferner können sie einen Nachrichtenrückkanal zur Übermittlung von Antworten der jeweiligen Servicekomponente an die Kommunikationskomponente umfassen. Der AMH und der Nachrichtenrückkanal können jedoch auch durch Funktionen innerhalb der Kommunikationskomponente ersetzt werden. Beispielsweise können entsprechende Adapter vorgesehen sein, welche Nachrichten direkt in eine Servicekomponente hineinschreiben.

In einem besonders bevorzugten Ausführungsbeispiel werden die erfindungsgemäßen Servicekomponenten ferner durch eine Sessionkomponente zur Bildung von Gruppen (Sessions) aus mehreren Datensätzen, eine Abstimmungskomponente zur Kumulation und Abstimmung von durch die Sessionkomponente gebildeten Gruppen aus Datensätzen und eine Korrekturkomponente zur Korrektur von fehlerhaften Datensätzen ergänzt. Dabei werden von der Sessionkomponente, der Abstimmungskomponente und/oder Umsysteme Fehlermeldungen erzeugt und diese an die Korrekturkomponente oder eine Auftragsvergabekomponente zur Vergabe von Korrekturaufträgen übermittelt.

Vorteilhaft ist ferner, dass die Anordnung wenigstens einen Korrektur-Client umfasst, der Korrekturaufträge von der Korrekturkomponente oder der Auftragsvergabekomponente empfängt. Beim Zugriff des Korrektur-Clients auf Daten der Umsysteme führt vorzugsweise die Dialogkomponente diesen Zugriff durch.

Von der Erfindung ist ferner ein Verfahren zum Betrieb eines computergestützten Filialsystems mit den verschiedenen Servicekomponenten der erfindungsgemäßen Anordnung von Vorrichtungen umfasst.

Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein besonders bevorzugtes Ausführungsbeispiel der Basiskomponenten der erfindungsgemäßen Anordnung von Vorrichtungen;
- Fig. 2: ein besonders bevorzugtes Ausführungsbeispiel einer Archivkomponente zur Archivierung und Recherche von Daten;
- Fig. 3: ein besonders bevorzugtes Ausführungsbeispiel einer Datenbereitstellungskomponente zur Bereitstellung von Stammdaten mehrerer Umsysteme;
- Fig. 4: ein besonders bevorzugtes Ausführungsbeispiel einer Dialogkomponente für die Durchführung eines statuslosen Online-Aufrufes;
- Fig. 5: ein besonders bevorzugtes Ausführungsbeispiel einer Prozesskomponente für die Durchführung eines statusbehafteten Prozesses;
- Fig. 6: ein besonders bevorzugtes Ausführungsbeispiel der erfindungsgemäßen Anordnung von Vorrichtungen mit Zusatzkomponenten zur Aufbereitung und Korrektur von Daten nach buchhalterischen Kriterien; und
- Fig. 7: ein besonders bevorzugtes Ausführungsbeispiel eines Verfahrens zur Durchführung eines Korrekturmanagements mit einem Korrektur-Client.

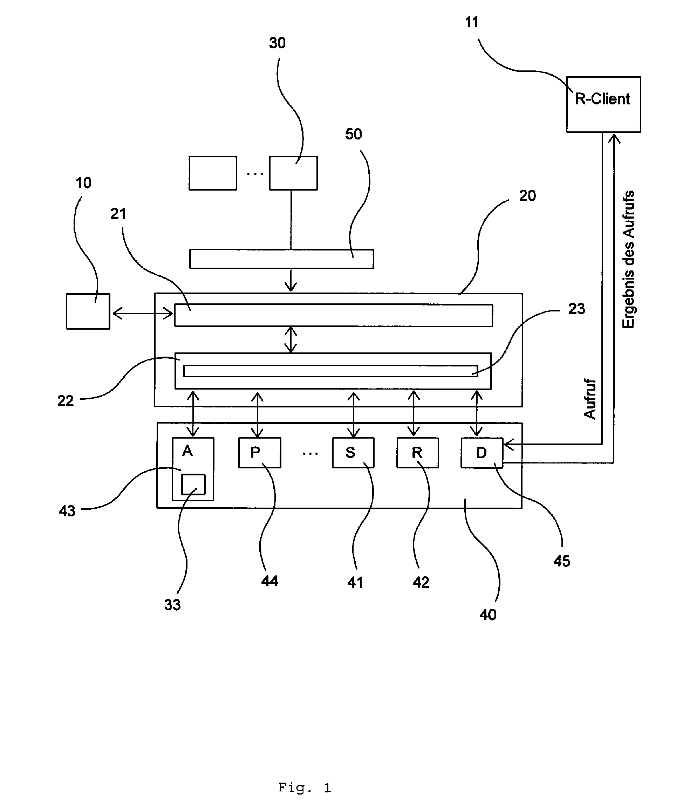

In Fig. 1 ist ein besonders bevorzugtes Ausführungsbeispiel der erfindungsgemäßen Anordnung von Vorrichtungen zum Betrieb eines Backends eines computergestützten Filialsystems dargestellt. Dabei dient das Backend schwerpunktmäßig der technischen Aufbereitung und Weiterleitung von Daten, die durch Clients 10 oder angeschlossene Umsysteme 30 erzeugt wurden. Die abschließende Verarbeitung der Daten erfolgt vorzugsweise in den Clients oder den Umsystemen selbst.

Die Clients 10 und ein oder mehrere Umsysteme 30 sind über eine zentrale Kommunikationskomponente 20 mit mehreren Servicekomponenten des Backends verbunden, wobei die Umsysteme vorzugsweise durch eine Sicherheitsschicht 50 von der Kommunikationskomponente getrennt sind. Die Servicekomponenten des Backends sind in Fig. 1 in ihrer Gesamtheit als Funktionsblock 40 bezeichnet. Um eine möglichst hohe Modularität des Systems zu erreichen, sind die Servicekomponenten 40 für die Verarbeitung von Daten im
Backend vorzugsweise gekapselt. Die einzelnen Servicekomponenten bilden für die sie benutzenden Systeme daher eine Blackbox, so dass jeder Baustein nach außen eine Schnittstelle zur Kommunikationskomponente 20 benötigt.

Die gesamte Kommunikation erfolgt vorzugsweise nachrichtenbasiert und wird vollständig über die Kommunikationskomponente 20 abgewickelt. Dies bedeutet, dass es zweckmäßigerweise keine kommunikativen Querverbindungen zwischen den Servicekomponenten 40 gibt, was zu einer sauberen Kapselung und einer leichten Veränderbarkeit führt.

Bei der gesamten Anordnung handelt es sich beispielsweise um ein Retail-System, das die Durchführung von Geschäftsvorgängen an den Clients 10 ermöglicht. Bei den Geschäftsvorgängen kann es sich um Transaktionen wie Käufe, Einlieferungen, Vertragsabschlüsse oder Abfragen an Filialschaltern, Automaten oder innerhalb von Internetauftritten handeln.

Die gesamte Anordnung wird vorzugsweise durch ein Computersystem gebildet, das möglichst einfach erweiterbar und veränderbar ist.

Derartige Computeranordnungen für Filialsysteme werden dazu üblicherweise stark modular ausgebildet. Bei den verwendeten Modulen handelt es sich um standardisierte Komponenten, welche von mehreren anderen Komponenten verwendet werden können. Vorzugsweise können neue Komponenten nach dem "Plug&Play"-Prinzip angeschlossen werden, ohne dass das gesamte System angepasst werden muss. Dabei ist es bekannt, Computersysteme so auszubilden, dass mehrere Clients Funktionalitäten einer zugehörigen Plattform nutzen. Üblicherweise kann der Bereich des Clients und/oder der Plattform als Frontend bezeichnet werden. Die Clients können permanent über eine Client-Server-Struktur mit einem Backend verbunden sein. Die Erfindung bevorzugt jedoch eine offline-fähige Verbindung der Clients mit Daten verarbeitenden Komponenten eines Backends. Der Client muss sich somit bei der Durchführung eines Geschäftsvorgangs nicht fest mit einem Server verbinden, sondern kann auch ohne Betrieb des Backends arbeiten. Die lose gekoppelte Anbindung kann beispielsweise über Web-Services oder SOAP erfolgen.

Durch Web-Services ist eine schnelle Übertragung von Aufrufen und Antworten beispielsweise über das Internet möglich. Ein Web-Service stellt Dienstleistungen über das Internet (HTTP) zur Verfügung. Da Web-Services alle dieselben offenen Standards zur Kommunikation nutzen, sind sie übergreifend kompatibel und miteinander verzahnbar.

Die Clients 10 sind vorzugsweise als Computeranwendungen ausgeführt, die beispielsweise in mehreren Filialen eines Unternehmens angeordnet sind. An einem Client werden Vorgänge durchgeführt, welche die Verwendung von Daten verschiedener Umsysteme erfordern, weil beispielsweise in eigenen Datensystemen der Umsysteme gespeicherte Kundendaten abgerufen werden müssen. Ferner müssen an den Clients erzeugte Daten eines Geschäftsvorgangs an die betreffenden Umsysteme übermittelt werden, wobei im Backend eine technische Aufbereitung der Daten gemäß der Anforderungen des Filialsystems und/oder der einzelnen Umsysteme erfolgen kann.

Da Unternehmen in Filialen oftmals verschiedene Dienstleistungen anbieten, müssen dazu auch verschiedene Umsysteme 30 angebunden werden. Werden in den Filialen eines Postunternehmens beispielsweise Telekommunikationsdienstleistungen wie Telefonanschlüsse oder Mobiltelefonverträge verschiedener Anbieter angeboten, müssen die Daten der jeweiligen Systeme der Anbieter an den Clients in der Filiale verfügbar gemacht werden. Das Gleiche gilt für Bankgeschäfte, Stromverträge, Warenverkäufe und natürlich die üblichen postalischen Dienstleistungen wie beispielsweise die Annahme von Postsendungen oder der Verkauf von Postwertzeichen. Wird die Erfindung für den Betrieb eines Filialsystems eines Transportunternehmens, von Kioskketten, Tankstellen oder sonstigen Unternehmen eingesetzt, müssen Daten für die entsprechenden Dienstleistungen bereitgestellt und verarbeitet werden.

Die Anordnung von Vorrichtungen umfasst insbesondere ein Archiv 33, das einer Archivkomponente 43 zuzuordnen ist. Das Archiv besteht vorzugsweise aus einem Kurzzeitarchiv und einem Langzeitarchiv. Das Langzeitarchiv arbeitet vorzugsweise nach dem Konzept des Content Addressed Storage (CAS) und wird durch ein CAS-basiertes Datenspeichersystem wie ein Festplattensystem gebildet, während das Kurzzeitarchiv durch eine Datenbank gebildet werden kann. Durch eine Speicherung von buchungsrelevanten Daten des Filialsystems im Archiv können Informationen sicher und unveränderbar abgelegt werden, was die Anforderungen der GoB und GoBS erfüllt.

Um für eine Recherche auf die Daten des Archivs 33 und/oder der Umsystemen 30 zugreifen zu können, ist wenigstens ein Recherche-Client 12 angeschlossen, der über verschiedene Komponenten des Systems auf das Archiv 33 und/oder Datenbanken der Umsysteme 30 zugreifen kann. Eine solche Recherche ist beispielsweise für Revisionen oder sonstige Prüfungen von Buchungsdaten erforderlich. Ein Recherche-Client ist so ausgebildet, dass er Suchanfragen auf der Basis definierter Suchkriterien durchführen und die Ergebnisse visualisieren kann. Suchkriterien beinhalten Dateninhalte zur Identifizierung eines oder mehrerer Geschäftsvorfälle. Dateninhalte sind dabei beispielsweise Filialschlüssel, Kassenschlüssel, Identcodes, Kundennummern, etc. Auch eine Freitexteingabe, z. B. von Kundennamen, kann ermöglicht werden. Die Antworten auf Recherche-Anfragen sollten zweckmäßigerweise in einer angemessenen Zeit erfolgen, wobei die Treffermengen vorzugsweise Einzelsätze umfassen. Die recherchierten Daten sollten ferner exportierbar sein.

Alle Clients und Umsysteme stehen vorzugsweise über die Kommunikationskomponente 20 in kommunikativer Verbindung mit dem Backend. Die Kommunikation der Servicekomponenten untereinander wird ebenfalls von der Kommunikationskomponente durchgeführt. Kommunikationskomponenten zur Abwicklung des Nachrichtentransfers zwischen zwei Bereichen eines Computersystems sind bekannt und können auf übliche Weise realisiert werden. Nachrichten können unterschiedlich geformte Informationen tragen. Beispielsweise stellen Rohdatensätze, Aufrufe oder Protokolle Nachrichten dar. Die gesamte Kommunikation basiert vorzugsweise auf SOAP (Simple Object Access Protocol) und XML (Extensible Markup Language). Die Kommunikationskomponente ist so in der Lage, Clients und Umsysteme offline-fähig anzubinden, wodurch diese arbeiten können, auch wenn das Backend nicht in Betrieb ist. Die lose gekoppelte Anbindung erfolgt über Web-Services und/oder SOAP.

XML ist eine Beschreibungssprache und stellt einen einheitlichen Standard für den einfachen, neutralen und flexiblen Datenaustausch dar. Eine SOAP-Nachricht ist nach dem Head-Body Pattern modelliert. Im Head-Bereich der Nachricht werden die Metainformationen der Nachricht untergebracht. Diese können Informationen über das Routing der Nachricht, über eine eventuelle Verschlüsselung und/oder über die Zugehörigkeit zu einer Transaktion umfassen. Der SOAP-Body enthält die eigentlichen Informationen der Nachricht, zu denen komplette Objekte, Parameter für aufzurufende Methoden oder Rohdatensätze gehören können. Die beiden Teile der SOAP-Nachricht werden vorzugsweise in einem SOAP-Envelope zusammengefasst.

Die Kommunikationskomponente 20 ist in wenigstens zwei Bereiche aufgeteilt, wobei ein erstes Modul 21 der Kommunikationskomponente dem Bereich der Clients zuzuordnen ist, während ein zweites Modul 22 dem Backend zuzuordnen ist. Der Bereich des Clients kann durch eine Anwendung auf einem Computer einer Filiale und/oder durch eine Plattform gebildet werden, welche dem Client bestimmte Funktionalitäten bereitstellt. Der Bereich des Clients und/oder einer Plattform wird in der Fig. 1 auch mit Frontend FE bezeichnet. Das zweite Modul 22 wird durch Funktionskomponenten z.B. auf einem Server gebildet und befindet sich in dem Ausführungsbeispiel der Fig. 1 in einem mit Backend BE bezeichneten Bereich. Die beiden Bereiche können jedoch funktional auch als zusammenhängende Kommunikationskomponente 20 angesehen werden und die Kommunikationskomponente bildet die zentrale Kommunikationsschnittstelle und ist dafür zuständig, dass Daten vom Frontend zum Backend und zurück gelangen.

Die beiden Module der Kommunikationskomponente müssen jedoch nicht permanent miteinander verbunden sein. Damit die Clients des Frontends auch ohne ständige Anbindung an die Servicekomponenten des Backends arbeiten können, sind sie vorzugsweise offlinefähig ausgebildet. Die Verbindung der Frontends und damit des ersten Moduls mit dem zweiten Modul des Backends kann dabei über verschiedene Wege des Nachrichtentransfers verwirklicht werden. Beispielsweise können statuslose Online-Aufrufe über das Internet und einen Web-Service durchgeführt werden, während statusbehaftete Prozesse über eine temporäre Datenverbindung zwischen den beiden Modulen der Kommunikationskomponente erfolgen können.

Die beiden Module 21 und 22 der Kommunikationskomponente 20 sind vom Aufruf her symmetrisch, sie bieten somit die gleichen Möglichkeiten zur Kommunikation an. Um den Datenfluss zu den Servicekomponenten und der Servicekomponenten untereinander zu steuern, ist innerhalb des zweiten Moduls 22 der Kommunikationskomponente 20 eine Routing-Komponente 23 vorgesehen. Eine zu versendende Nachricht gelangt in die interne Datenhaltung des zweiten Moduls 22 der Kommunikationskomponente 20, von der aus die Routing-Komponente 23 die Nachrichtenverteilung ansteuert. Die Routing-Komponente sorgt dafür, dass die Nachrichten an die richtigen Ausgänge geschickt werden. Dabei ist es bevorzugt, dass die Nachrichten lediglich logische Adressen aufweisen, aus denen die Routing-Komponente die entsprechenden physischen Adressen erzeugt und die Datensätze an den jeweiligen Ausgang schickt. Dies hat den Vorteil, dass Adressen von Zielkomponenten verändert werden können, ohne dass die Struktur der Datensätze angepasst werden muss.

Die Servicekomponenten 40 des Backends haben vorzugsweise einen gemeinsamen Grundaufbau und weisen dabei alle jeweils eine Schnittstelle zur Kommunikationskomponente 20 auf. Vorzugsweise erfolgt jegliche Kommunikation der Komponenten mit anderen Modulen über diese Schnittstelle. Es kann vorteilhaft sein, dass Daten von den Servicekomponenten nicht direkt von der Schnittstelle geholt werden, sondern eine Nachrichten verarbeitende Komponente (Active Message Handler - AMH) diese Aufgabe übernimmt. Der AMH bildet eine Abstraktionsschicht, welche die Servicekomponenten von der Notwendigkeit befreien kann, spezifisches Wissen über die Kommunikationskomponente 20 zu haben. Zum anderen kann er den aktiven Part übernehmen, Daten aus der Kommunikationskomponente abzuholen und in die Servicekomponenten hineinzureichen. Dabei ist es eine wichtige Eigenschaft des Active Message Handlers, dass er eine flexible und gleichzeitig standardisierte Möglichkeit bieten kann, den Nachrichtenverkehr zwischen der Kommunikationskomponente 20 und den Servicekomponenten des Backends asynchron zu gestalten.

Es kann grundsätzlich erstrebenswert sein, dass die Servicekomponenten des Backends nicht direkt an die Schnittstelle zur Kommunikationskomponente 20 gehen, da viele Aufgaben von allen Servicekomponenten in immer gleicher Funktion, aber unterschiedlicher Ausprägung erledigt werden müssen. So muss das richtige Protokoll beachtet werden, die Daten müssen aktiv abgeholt werden, eine Skalierung muss geschaffen werden und in der jeweiligen Servicekomponente ist ein schneller Empfänger erforderlich. Dabei ist die Schnittstelle der Servicekomponenten vorzugsweise passiv ausgestaltet, so dass sie lediglich von anderen Modulen beauftragt wird, eine Nachricht zu holen. Der Active Message Handler ist dagegen vorzugsweise aktiv ausgestaltet und holt permanent Daten von der Kommunikationskomponente ab, wobei er keinen Anstoß benötigt.

Es kann jedoch auch vorteilhaft sein, dass die Servicekomponenten nicht mit einem Active Message Handler ausgestattet sind, sondern die Kommunikationskomponente bereits Mittel zur Durchführung dieser Funktion umfasst. Ferner kann es für einige Servicekomponenten vorteilhaft sein, dass diese passiv mit Nachrichten beliefert werden. In diesem Fall kann die Kommunikationskomponente beispielsweise entsprechende Adapter zum direkten Schreiben von Nachrichten in eine Servicekomponente umfassen.

Da die Kommunikationskomponente 20 in einem besonders bevorzugten Ausführungsbeispiel der Erfindung so ausgebildet ist, dass sie ein reines Transportmedium ist, das keine Daten aufbewahrt, erwartet die Kommunikationskomponente eine unmittelbare Bestätigung des Empfangs einer Nachricht, nachdem eine Servicekomponente eine Nachricht angefordert hat, da sie ansonsten zu viele Daten speichern müsste. Dies hat zur Konsequenz, dass es nicht zweckmäßig ist, wenn die Servicekomponenten eine Nachricht abholen, diese vollständig verarbeiten und erst dann den Empfang bestätigen. Die Servicekomponenten bringen die Nachricht daher vorzugsweise schnell an einen sicheren Ort und bestätigen anschließend sofort den Empfang.

Ein asynchroner Datenverkehr zwischen der Kommunikationskomponente und den Servicekomponenten kann beispielsweise mit einem AMH dadurch erreicht werden, dass der AMH den Eingang von Nachrichten und deren Verarbeitung trennt. Der AMH hat lediglich die Aufgabe, Daten schnellstmöglich weiterzuleiten, die Servicekomponenten können die Nachrichten hingegen je nach Last unabhängig von der Kommunikationskomponente abarbeiten. Es findet somit eine Entkopplung statt, welche die Kommunikationskomponente unabhängig von den Servicekomponenten des Backends machen kann.

Ferner kann es vorteilhaft sein, dass alle Servicekomponenten 40 einen Nachrichtenrückkanal zur Übermittlung von Nachrichten der Komponenten an andere Module umfassen. Der Nachrichtenrückkanal ist vorzugsweise als Funktionsbibliothek ausgebildet. Aufgabe dieser Funktionsbibliothek ist die Erleichterung des Umgangs der unterschiedlichen Komponenten des Systems mit der Kommunikationskomponente 20. Entsprechend bietet er Funktionsaufrufe etwa für den korrekten Aufbau von SOAP Envelopes oder er ermöglicht die einfache Übergabe von zu verschickenden Nachrichten.

Sowohl die Clients als auch die Umsysteme 30 stellen Daten für andere Komponenten vorzugsweise im XML-Format (Extensible Markup Language) bereit. Falls angeschlossene Systeme nicht mit diesem Datenmodell arbeiten, kann in den Servicekomponenten eine entsprechende Transformation der Nachrichten/Daten erforderlich sein. Die Transformation erfolgt vorzugsweise im Rahmen einer Umwandlung von XML-Dateien mit der Formatsprache XSL (Extensible Stylesheet language). Die Formatsprache XSL besteht aus zwei Komponenten, von denen die erste Komponente zur Formatierung von XML-Dateien dient. Eine zweite Komponente transformiert XML-Dateien erneut in andere XML-Dateien oder in Dateien eines anderen Formats, wobei für die Transformationskomponente die Bezeichnung XSLT (XSL Transformation) geläufig ist und hier verwendet wird.

Datenmodelle von sendenden Komponenten werden somit durch hinterlegte Transformationsdateien in das jeweilige Datenmodell der empfangenden Komponente transformiert. Bei den Transformationsdateien handelt es sich üblicherweise um XSLTs. Verwenden einzelne Servicekomponenten zur Durchführung ihrer Funktionen das Produkt BizTalk Server von Microsoft, kann es sich bei den Transformationsdateien auch um so genannte BizTalk-Maps handeln. In einem bevorzugten Ausführungsbeispiel der Erfindung finden dabei ausschließlich statische Zuordnungen statt. Berechnungen und Verkettungen finden dagegen nicht statt.

Erfindungsgemäß sieht die Anordnung eine Archivkomponente 43 vor, welche in Fig. 1 auch mit A bezeichnet ist. Die Archivkomponente bietet anderen Komponenten Dienste an, um Daten zu archivieren oder aus ihrem Archiv 33 zu lesen. Das Archiv kann in einem besonders bevorzugten Ausführungsbeispiel der Erfindung XML-basierte Daten einlagern und auslesen. Ferner sollte in dem Archiv gesucht werden können.

Zusätzlich zur direkten Verwendung als Speicherort kann die Archivkomponente 43 auch implizit genutzt werden, wenn das Archiv als Zwischenstation für zu archivierende Aufrufe angegeben wird. In diesem Fall wird eine Nachricht auf dem Weg zum eigentlichen Empfänger über das Archiv geleitet und automatisch von der Archivkomponente archiviert. Ein Aufruf wird über das Archiv geleitet, dort archiviert und dann seriell an den eigentlichen Empfänger übermittelt. So kann ohne die Notwendigkeit von verteilten Transaktionen eine konsistente Datenhaltung zwischen Archiv und Empfänger einer Nachricht sichergestellt werden. Da auch die Zwischenstation selbst weitere Zwischenschritte für das Nachrichtenrouting angeben kann, besteht ferner die Möglichkeit, dass an zentraler Stelle im Backend die Archivierung von Nachrichten erzwungen werden kann, ohne dass eine Client-Applikation angepasst werden muss.

Die Archivkomponente 43 spielt eine zentrale Rolle im Rahmen der GoB- und GoBS-Anforderungen an das System. Das Archiv 33 enthält das Grundbuch und bewahrt somit sämtliche Daten im Rahmen der gesetzlichen Aufbewahrungsfrist auf. Das Grundbuch ist ein Erfassungsprotokoll, welches sicherstellt, dass alle Geschäftsfälle chronologisch, vollständig und nachvollziehbar erfasst werden. Zur Erfüllung der Anforderungen an ein Grundbuch sind Daten beispielsweise auf unveränderliche Datenträger zu schreiben, wobei nicht nur die eigentlichen Belegdaten archivierungspflichtig sind, sondern auch die zugehörigen Stammdaten, die Protokolle oder auch entsprechende Programmversionen. Letztlich muss alles archiviert werden, was zur Nachvollziehbarkeit eines bestimmten Geschäftsablaufs erforderlich ist. Daneben erfüllt die Archivkomponente aber auch den Zweck, als Recherchepool innerhalb definierter Zeiträume relevante Daten online zur Verfügung zu stellen.

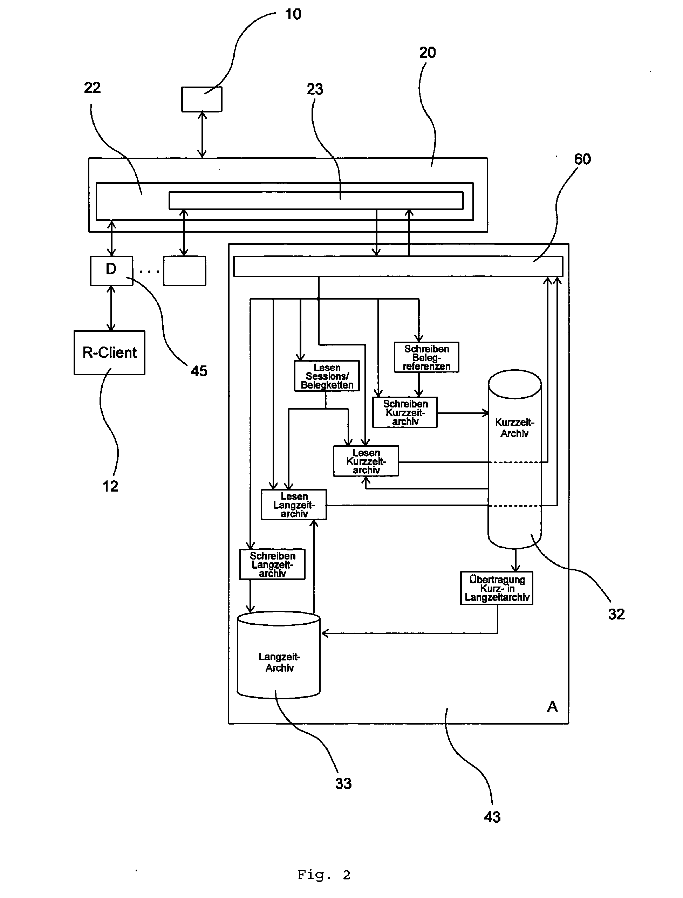

Der Aufbau und die einzelnen Funktionsbereiche der Archivkomponente sind schematisch in Fig. 2 dargestellt. Die Archivkomponente 43 wird über eine Schnittstelle 60 an die Kommunikationskomponente 20 angebunden und Daten und Anfragen kommen vorzugsweise ausschließlich über diesen Kanal in die Komponente und verlassen sie auf diesem Weg auch wieder. Die Komponente wird vorzugsweise von einem Adapter im zweiten Modul 22 der Kommunikationskomponente 20 passiv mit Nachrichten beliefert. Der Adapter schreibt Daten direkt in die Archivkomponente ein.

Von der Schnittstelle 60 gelangen Nachrichten zu einem Routing, welches anhand der angelieferten Daten entscheidet, ob sie in ein Kurzzeitarchiv 32 und/oder das Langzeitarchiv 31 geleitet werden sollen. Bei den dazu verwendeten Servicestrukturen innerhalb der Archivkomponente kann es sich beispielsweise um Komponenten zum Schreiben von Daten in das Kurzzeit- oder Langzeitarchiv handeln. Das Kurzzeitarchiv 32 wird beispielsweise durch eine Datenbank gebildet und nimmt für einen bestimmten Zeitraum alle buchungsrelevanten Daten auf. Dazu zählen Rohdatensätze, Referenznummern, korrigierte Datensätze und Korrekturprotokolle. Vom Kurzzeitarchiv werden diese Daten in bestimmten Zyklen an das Langzeitarchiv 31 übergeben. Beispielsweise können Daten einmal pro Tag in das Langzeitarchiv exportiert werden.

Das Kurzzeitarchiv 32 dient ferner als Datenquelle zur Online-Recherche auf dem Langzeitarchiv 31, das beispielsweise durch ein CAS-basiertes Festplattensystem gebildet wird. Dazu werden im Kurzzeitarchiv Suchkriterien und die zugehörigen Kennungen der Datensätze des Langzeitarchivs gespeichert. Für den Aufruf eines Datensatzes in dem Langzeitarchiv in Form eines Festplattensystems muss die Anwendung nicht den physischen Speicherort der Daten verfolgen. Anhand der Context-Attribute wird vielmehr eine eindeutige Kennung erzeugt, mit welcher der Datensatz aufgerufen werden kann. Die Kennung wird zweckmäßigerweise zum zugehörigen Datensatz im Kurzzeitarchiv hinterlegt. Das Kurzzeitarchiv muss für Online-Abfragen in der Lage sein, schnell auf diese Daten zugreifen zu können. Dabei werden neben rein technischen Zugriffen auch fachliche Zugriffe realisiert, falls beispielsweise mit bestimmten Suchkriterien eine Menge von Datensätzen angefordert wird. In der Archivkomponente sind daher Komponenten zum Lesen von Daten aus dem Archiv 33 vorgesehen, wobei gesuchte Datensätze aus dem Kurzzeit- oder dem Langzeitarchiv ausgelesen werden.

Die Archivkomponente 43 wird von sehr vielen verschiedenen Lieferanten beliefert, so dass auch die gelieferten Datentypen entsprechend vielfältig sind. Eine der wichtigen Aufgaben der Archivkomponente kommt daher dem Routing zu, das die jeweiligen Daten an die richtige Stelle bringt. Einen wichtigen Datentyp stellen die Rohdaten der Clients 10 dar. Bei diesen handelt es sich um Buchungen verursachende Belege, die aufbewahrungspflichtig sind. Rohdatensätze sind vorzugsweise feingranulare XML-Datensätze, die Geschäftsvorfälle auf unterster Ebene beschreiben. Die Rohdaten gehen zweckmäßigerweise vor und nach der Filterung durch eine Rohdatenkomponente 42 in die Archivkomponente. So können sowohl die direkt von einem Client erzeugten Rohdatensätze, als auch die gefilterten Pakete für Umsysteme archiviert werden.

Die Rohdatensätze gehen in der Archivkomponente 43 an ein Routing, welches den Typ "Rohdatensatz" erkennt. Das Routing sendet die Rohdaten an ein Mittel zum direkten Schreiben der Daten in das Kurzzeitarchiv. In bestimmten Zeitintervallen werden die Daten des Kurzzeitarchivs in das Langzeitarchiv exportiert, wobei im Kurzzeitarchiv Suchkriterien und die Kennungen zum Auffinden der entsprechenden Datensätze im Langzeitarchiv hinterlegt werden.

Neben Rohdaten werden auch Protokolle im Langzeitarchiv archiviert. Zu den Protokollen zählen beispielsweise Protokolle der Verarbeitung wie Fehlerlogs oder auch fachliche Verarbeitungsnachweise. In den Verarbeitungsnachweisen wird der Weg von Daten durch die unterschiedlichen Servicekomponenten im Backend aufgezeichnet, wodurch eine spätere Rekonstruktion gegeben ist. Protokolle und Verarbeitungsnachweise werden ebenfalls über die Schnittstelle 60 zur Kommunikationskomponente 20 in die Archivkomponente 43 eingeliefert.

Bei einer Abfrage eines Recherche-Clients 12 im Archiv 33 verwendet ein Recherche-Client vorzugsweise die Dialogkomponente 45, auf welche er über einen Web-Service zugreift. Über die Dialogkomponente steht dem Recherche-Client ein schneller Zugriff auf das Archiv 33 und/oder Datensysteme der Umsysteme 30 zur Verfügung. Bei einem Aufruf im Archiv 33 sendet die Dialogkomponente die Suchkriterien des jeweiligen Recherche-Clients über die Kommunikationskomponente 20 an die Archivkomponente 43, welche den Aufruf verarbeitet. Der Aufruf wird an das Routing übergeben und das Routing leitet den Aufruf an eine Komponente zum Lesen von Daten aus dem Kurzzeitarchiv weiter, welche den eigentlichen Aufruf durchführt. Liegt der gesuchte Datensatz noch im Kurzzeitarchiv, wird er direkt aus diesem ausgelesen. Wurde er bereits in das Langzeitarchiv exportiert, wird er anhand der Kennung aus diesem ausgelesen. Es handelt sich dabei vorzugsweise um ein asynchrones Verfahren, bei dem Verarbeitungsprozesse voneinander entkoppelt werden. Der Aufruf im Archiv wird daher von der Archivkomponente zeitversetzt und unabhängig vom Absender des Aufrufs durchgeführt. Der Absender wartet in seiner eigenen Verarbeitung nicht auf das Ergebnis des asynchronen Prozesses, sondern arbeitet nach Versand der Nachricht weiter.

Durch die Zweiteilung der Speicherung von Suchkriterien und Kennungen im Kurzzeitarchiv und den kompletten buchungsrelevanten Daten im Langzeitarchiv kann eine Recherche ermöglicht werden, welche sich dem Recherche-Client als Online-Recherche darstellt. Die buchungsrelevanten Daten können so über einen Zeitraum von über 10 Jahren gesucht werden, als ob sie auf einer schnellen Datenbank wie dem Kurzeitarchiv liegen würden. Die Online-Recherche wird ferner durch die Verwendung eines Web-Services und der Dialogkomponente unterstützt.

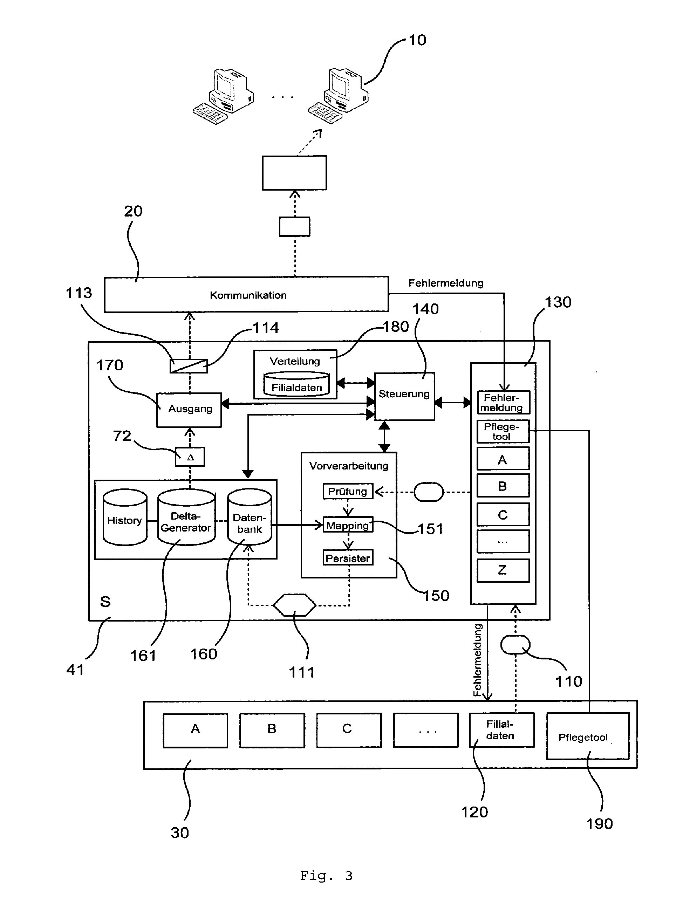

Zu den Servicekomponenten 40 des Backends kann ferner eine Datenbereitstellungskomponente 41 mit Mitteln zur Bereitstellung von Daten der Umsysteme 30 an den Clients zählen. Die Datenbereitstellungskomponente ist in Fig. 1 auch mit S gekennzeichnet. Der Aufbau und die einzelnen Funktionsbereiche der Datenbereitstellungskomponente werden anhand der Fig. 3 erläutert. Dabei zeigt Fig. 3 ein besonders bevorzugtes Ausführungsbeispiel der Datenbereitstellungskomponente zur Verteilung von Daten mehrerer Umsysteme 30 an wenigstens einen Client 10. Der Transportweg einer Datei eines Umsystems durch die Datenbereitstellungskomponente und die Umwandlung der darin enthaltenen Daten in verschiedene Formate ist in Fig. 3 schematisch mit einer gestrichelten Linie dargestellt.

Die Datenbereitstellungskomponente ist über die Kommunikationskomponente 20 an das Filialsystem und damit an die Clients 10 im Frontend angeschlossen und versorgt das Frontend mit Stammdaten von einem oder mehreren Umsystemen. Bei der Verteilung der Stammdaten der Umsysteme an die Clients bzw. Filialen kann beispielsweise vorgesehen sein, dass alle Clients über den gleichen Stammdateninhalt verfügen sollen. In einer alternativen Ausführungsform erhalten einige Filialen eine Sonderverteilung, falls diese beispielsweise als Pilotfilialen für neue Systeme oder Sonderaktionen dienen sollen.

Dabei kann es vorgesehen sein, dass einzelne Clients in den Filialen nur eine Auswahl der Dienstleistungen anbieten, so dass nicht alle Clients über Daten aller Umsysteme verfügen müssen. Da von dem erfindungsgemäßen System auch Ausführungsformen umfasst sind, bei welchen die Daten nicht direkt an einzelne Clients, sondern der Filiale übermittelt werden, kann es vorgesehen sein, dass Daten in einer Filiale erneut danach verteilt werden, welcher Client welche Daten benötigt.

Die Datenbereitstellungskomponente 40 stellt als einheitliche Schnittstelle einen Stammdatenservice für die Stammdaten liefernden Umsysteme bereit. Die Datenbereitstellungskomponente wird im Folgenden auch als DBK bezeichnet.

Die Umsysteme 30 umfassen vorzugsweise ein Pflegetool 190, welches zur manuellen Einlieferung von Daten an die Clients dienen kann. Über das Pflegetool können so beispielsweise Daten verteilt werden, die nicht automatisiert von einem Umsystem generiert wurden. Das Pflegetool wird jedoch von der Datenbereitstellungskomponente als weiteres Umsystem angesehen. Dies ermöglicht eine standardisierte Datenaufnahme für Umsysteme und Pflegetool.

In einem bevorzugten Ausführungsbeispiel der Erfindung ist als weiteres Umsystem ferner ein Datensystem 120 zur Bereitstellung von Filialdaten vorgesehen. Das Umsystem 120 liefert beispielsweise an jedem Werktag Filial-, Kassen- und Gerätedaten sowie Einlieferschlusszeiten. Die Filialdaten dienen zur Verteilsteuerung der Stammdaten an die einzelnen Clients, so dass die Verteilung auf einfache Weise an neue Gegebenheiten angepasst werden kann.

Ein zentraler Bestandteil der Datenbereitstellungskomponente ist eine Datenbank 160, in welcher die Datenbestände aller Umsysteme nach einer entsprechenden Verarbeitung durch die Komponente hinterlegt werden. Bei der Datenbank handelt es sich vorzugsweise um einen SQL-Server. In der Datenbank werden ferner Verarbeitungsschemata für die verschiedenen Datensysteme hinterlegt. Die Datenbank der Datenbereitstellungskomponente umfasst somit stets den für die Clients relevanten Datenbestand der Umsysteme, so dass die Datenbereitstellungskomponente den Datenbestand aller Clients vorhält. In einem besonders bevorzugten Ausführungsbeispiel der Erfindung werden verschiedene Inhalte der Datenbank regelmäßig durch die Archivkomponente im Archiv 33 gespeichert, falls für Stammdaten eine Speicherung über einen längeren Zeitraum gefordert ist.

Die Datenbereitstellungskomponente 41 weist als weiteren wesentlichen Bestandteil eine definierte Übergabeschnittstelle 130 zur Einlieferung von Dateien der Umsysteme auf. Dabei handelt es sich vorzugsweise um ein Fileshare, in dem jedes Umsystem seine Daten hinterlegt.

Ist eine Datei 110 eines Umsystems in der Übergabeschnittstelle der Datenbereitstellungskomponente 41 hinterlegt, erfolgt die weitere Verarbeitung in einer nachgelagerten Pipeline. Die Verarbeitung der Daten wird zweckmäßigerweise von einer Steuerungskomponente 140 gesteuert. Bei der Steuerungskomponente handelt es sich vorzugsweise um ein auf XML basierendes Messaging System und die Interaktion der Steuerungskomponente 140 mit den verschiedenen Funktionsbereichen der Datenbereitstellungskomponente 41 ist in Fig. 3 mit ausgefüllten Pfeilen dargestellt. Als Messaging System kann beispielsweise das Produkt BizTalk Server von Microsoft eingesetzt werden.

Das Messaging System dient der Integration, Verwaltung und Automatisierung der Abläufe innerhalb der Datenbereitstellungskomponente und verbindet die Datenbereitstellungskomponente ferner mit anderen Komponenten des Gesamtsystems. Das Messaging System stellt Methoden zur Festlegung von Prozessen und Mechanismen zur Kommunikation zwischen den verschiedenen Anwendungen zur Verfügung, welche der Prozess verwendet. Das Steuerungsmodul 140 kann verschiedene Servicekomponenten des Backends miteinander verbinden und dabei den Transfer von Nachrichten übernehmen. Falls als Steuerungskomponente beispielsweise BizTalk verwendet wird, können Nachrichten über eine Vielzahl von Adaptern gesendet und empfangen werden. Die Adapter können beispielsweise Nachrichten über die Protokolle FILE, http, SMTP, SOAP, FTP, SQL und EDI senden und empfangen.

Die Steuerungskomponente 140 steuert somit auch das Zusammenspiel der DBK mit anderen Komponenten des Gesamtsystems. Dazu gehört beispielsweise die Kommunikationskomponente 20, welche die von der DBK aufbereiteten Daten an die Clients verteilt. Fehlermeldungen und/oder Datenanforderungen der Clients werden ebenfalls an die Kommunikationskomponente 20 übermittelt, welche diese an die DBK weiterleitet.

Ein Umsystem stellt seine Dateien auf einem Fileshare 130 vorzugsweise in einem definierten Verzeichnis bereit. Es kann vorgesehen sein, dass das Verzeichnis in bestimmten Zeitabständen ebenfalls der Archivkomponente zur Archivierung übergeben wird. Eine in der Übergabeschnittstelle empfangene Datei wird an die Vorverarbeitungskomponente 150 übergeben und dort verarbeitet. Ein Validator prüft, ob die Datei einem hinterlegten Schema des Umsystems entspricht, wobei das Schema anhand von Metainformationen aus einer Tabelle in der Datenbank 160 geladen wird. Schlägt die Validierung fehl, wird zweckmäßigerweise eine Benachrichtigung an das liefernde Umsystem geschickt. Beispielsweise kann die E-Mailadresse des Umsystems von der Steuerungskomponente 140 anhand des Umsystemnamens aus der Datenbank 160 ausgelesen und eine Nachricht an das Umsystem gesendet werden.

Kann die Datei dagegen erfolgreich validiert werden, wird die Datei in eine Nachricht in einem Envelope verpackt. In den Header dieses Envelopes werden vorzugsweise die Version des geprüften Schemas, eine Message-ID, sowie der Name des liefernden Umsystems in zugehörige Attributfelder eingetragen, da diese bei der anschließenden Verarbeitung in einer Mapping-Komponente 151 benötigt werden können. Die Message-ID wird dabei auch für ein Monitoring der Anwendung verwendet.

Im nächsten Schritt wird die Datei in einer Mapping-Komponente 151 so transformiert, dass sie in die Datenbank 160 eingetragen werden kann. Dazu wird eine in der Datenbank 160 hinterlegte Transformationsdatei herangezogen, mit der sich die XML-Datei in eine Update-Datennachricht 111 transformieren lässt, welche in die Datenbank 160 einlesbar ist. Als Transformationsdatei kann beispielsweise ein XSLT verwendet werden. Wird BizTalk verwendet, können als Transformationsdatei ferner so genannte Biz Talk-Maps eingesetzt werden. Es erfolgt eine Konvertierung der Datei des Umsystems auf das Datenmodell der Datenbereitstellungskomponente. Die zum Mapping erforderliche Transformationsdatei kann anhand der Metadaten der Schema-Version und des Namens des liefernden Umsystems bestimmt werden, wobei die Tabelle beispielsweise in der Datenbank 160 hinterlegt sein kann. Die Datenpflege dieser Tabelle erfolgt vorzugsweise über das Pflegetool 190.

Die von der Mapping-Komponente erzeugte Update-Datennachricht 111 stellt Datenbankanweisungen dar und wird einem Persister übergeben, welcher die Daten entsprechend in die Datenbank 160 einpflegt. Bei einer Update-Datennachricht 111 handelt es sich um eine Datei, die eine Tabelle enthält, in der unter anderem die Lieferversion gespeichert ist. In der Update-Datennachricht sind ferner Anweisungen (Stored Procedures) enthalten, welche nach dem Einfügen der Daten in die Datenbank ausgeführt werden sollen. Beispielsweise kann eine Anweisung erfordern, dass Schema- und/oder Mapping-Versionen hinzugefügt werden.

Handelt es sich bei den im Fileshare 130 eingelieferten Daten um eine Datei mit einem anderen Format als XML, erfolgt vor der Konvertierung in eine XML-Datei vorzugsweise eine Speicherung dieser Datei in der Datenbank 160. Wird beispielsweise eine Datei im Format DBF eingeliefert, wird das DBF-File in die Datenbank 160 getrackt und danach anhand eines Flatfile-Schemas in ein XML-File konvertiert. Das Flatfileschema ist dabei beispielsweise in der Datenbank 160 hinterlegt und kann zur Konvertierung herangezogen werden. Liegt die Datei nun in einem XML-Format vor, schließt sich die beschriebene Weiterverarbeitung der Datei zu einer Update-Datennachricht und die Speicherung der Daten in der Datenbank 160 an.

In der Datenbank 160 der Datenbereitstellungskomponente 41 wird so das Stammdatenmodell der Clients vorgehalten und Stammdatenlieferungen von den verschiedenen Umsystemen gespeichert. Die Datenlieferungen werden dabei filialgetreu historisiert, so dass jeder Stammdatenzustand einer Filiale bzw. eines Clients festgehalten und auf diese Weise eine Versionsführung für die Stammdaten der Clients vorgenommen werden kann. Die Versionierung erfolgt dabei vorzugsweise durch die eingangsverarbeitenden Prozesse.

Auch die Filialdaten eines speziellen Umsystems 120 werden als XML-Datei im Fileshare 130 der Datenbereitstellungskomponente hinterlegt und von der Vorverarbeitungskomponente in eine Update-Datennachricht umgewandelt. Die Daten werden ebenfalls in die Datenbank 160 eingelesen und werden über eine Verteilsteuerungskomponente 180 für die Verteilung der von den Umsystemen erhaltenen Daten an die Clients verwendet.

An die beschriebene Eingangsverarbeitung der Stammdaten bis in die Datenbank 160 schließt sich die Ausgangsverarbeitung an, zu welcher ein Deltagenerator 161 zu zählen ist. Der Deltagenerator ist zuständig für die Erstellung und Übersendung der Stammdatenlieferungen von den Umsystemen an die Clients. Der Deltagenerator erzeugt aus den Stammdatenlieferungen Deltalieferungen für die jeweiligen Frontends, wobei die Deltalieferungen zweckmäßigerweise in einem Format bereitgestellt werden, welches ein automatisiertes Einspielen in eine Datenbank des Frontends ermöglicht. Vorzugsweise wird dazu ebenfalls das Format XML verwendet.

Lieferungen der Umsysteme entsprechen bei den Stammdatenlieferungen vordefinierten Schemata, wobei diese Schemata in der Datenbank 160 entsprechende Datenbereiche abdecken. Die Erzeugung der Stammdatenlieferungen für die Frontends erfolgt daher schemabezogen. Der Deltagenerator wird vorzugsweise ebenfalls von der Steuerungskomponente 140 angesteuert, wobei er beispielsweise zeitgesteuert oder ereignisgesteuert gestartet werden kann. Der Deltagenerator wird vorzugsweise von dem Pflegetool 190 konfiguriert. Die Konfiguration kann dabei die Definition neuer Schemata, die Deaktivierung alter Schemata und/oder die Zuordnung der Datenbereiche zu den Schemata beinhalten. Eine Schemadefinition umfasst mehrere Tabellen, in denen definiert ist, welche Tabellen zu einem Schema gehören und wie diese Tabellen strukturiert sind. Die Schemadefinition wird für den Deltagenerator dazu genutzt, um dynamisch zur Laufzeit die Schemakonfiguration auszulesen, die Datenbereiche zu identifizieren, die Struktur der Datenbereiche auszuwerten und daraus Datensätze zu generieren.

Der Deltagenerator erzeugt aus den Stammdatenlieferungen Deltas und Update-Datenpakete 112 in Form von Datenbankanweisungen, welche die Datenänderungen enthalten. Die Umsetzung dieser Prozesse kann durch Prozesse der Steuerungskomponente 140 und den in der Datenbank gespeicherten Anweisungen (Stored Procedures) erfolgen. Das Steuerungsmodul übernimmt dabei neben der Steuerung vorzugsweise auch die Kontrolle und die Protokollierung der Prozesse. Die Prozesse werden im Wesentlichen durch Datenbankprozeduren umgesetzt. Der Deltagenerator führt dabei eine schemabezogene Delta-Betrachtung zwischen zwei Versionsständen durch und das so ermittelte Delta wird als Datensatz an das Steuerungsmodul 140 zurückgegeben.

Bei der Deltaermittlung ermittelt der Generator pro Client alle neuen Lieferungen, die noch nicht versendet wurden. Zu diesen Lieferungen werden die zuletzt gesendeten Lieferungen ermittelt, und ein Vergleich der beiden Lieferungen ergibt die Datensätze, welche in den alten, jedoch nicht in den neuen Lieferungen vorhanden sind. Für diese Datensätze muss beim Client eine Löschung erfolgen. Ferner ergibt der Vergleich die Datensätze, die in der neuen, jedoch nicht in der alten Lieferung enthalten sind. Diese Datensätze müssen am Client eingefügt werden. Für geänderte Datensätze erfolgen dabei am Client vorzugsweise zuerst eine Löschung und dann eine Einfügung des neuen Datensatzes.

Der Deltagenerator bereitet die Deltas zu Datensätzen auf und übergibt diese an das Steuerungsmodul. Das Steuerungsmodul nimmt die Datensätze als Datenstrom beispielsweise von dem SQL-Server entgegen und erzeugt daraus vorzugsweise zwei physisch getrennte XML-Dateien. Eine erste Datei 113 mit der beispielhaften Bezeichnung *UpdatePackage.xml* ist eine Datendatei, während es sich bei einer zweiten Datei 114 mit der beispielhaften Bezeichnung *Ziele.xml* um eine Steuerdatei handelt. In der Datendatei 113 sind die Deltas in Form von SQL-Statements enthalten, welche in der Datenbank eines Clients verarbeitet werden können. Die Steuerdatei 114 enthält die Adressierung der Datei. Die beiden Dateien werden vorzugsweise komprimiert und zur Übergabe der Daten an die Kommunikationskomponente 20 wird eine Ausgangsschnittstelle 170 genutzt.

In einem besonders bevorzugten Ausführungsbeispiel der Erfindung erfolgt über die Datenbereitstellungskomponente 41 neben der Übermittlung von Stammdaten an die Clients auch eine Übermittlung von Strukturänderungen an die Clients. Dazu wird als weiteres Umsystem das Pflegetool 190 an die Datenbereitstellungskomponente angebunden. Falls beispielsweise für die Software an den Frontends neue Strukturen in den Datenbanken der Clients benötigt werden, können diese über das Pflegetool manuell definiert und über die DBK an die Clients verteilt werden. Wurden die Strukturänderungen an die Clients übermittelt, können die Umsysteme die entsprechenden Stammdaten liefern.

Es hat sich als zweckmäßig erwiesen, die für eine Strukturänderung erforderlichen Datenbankanweisungen in einer Testumgebung zu testen und diese dann über die Übergabeschnittstelle in die Datenbereitstellungskomponente einzuspielen. Vorzugsweise übergibt das Pflegetool somit bereits eine Update-Datennachricht an die Datenbank 160, so dass kein Mapping erforderlich ist. Die Anweisungen werden in die Datenbank 160 geschrieben und die Mappings der Umsysteme entsprechend angepasst. Die Filialen, an denen die Strukturänderungen greifen sollen, erhalten über die Kommunikationskomponente 20 die dazu erforderlichen Datenbankanweisungen wie beispielsweise SQL-Statements.

Kann ein Client eine Stammdatenlieferung nicht verarbeiten, erzeugt er eine Fehlermeldung an die Datenbereitstellungskomponente. Bei der Verarbeitung kann er beispielsweise feststellen, dass ein Update-Datenpaket nicht gültig oder die Update-ID falsch ist. Daraufhin markiert er das Paket als fehlerhaft und meldet über eine Fehlerquittung den Fehlersachverhalt an die DBK zurück. Die Übermittlung der Fehlermeldung an die DBK erfolgt vorzugsweise ebenfalls über die Kommunikationskomponente 20 und in Form eines XML-Dokuments. Besonders bevorzugt ist die Einbettung der XML-Datei in einen SOAP-Envelope. Die Fehlermeldung wird in das Fileshare 130 eingestellt und von der Datenbereitstellungskomponente verarbeitet.

Die Datenbereitstellungskomponente 41 bildet somit einen Weg von Stammdaten von den Umsystemen zu den Clients ab. Beim Transport von Daten der Clients zu den Umsystemen sieht die erfindungsgemäße Anordnung von Vorrichtungen eine Rohdatenkomponente 42 vor, die in Fig. 1 auch mit R bezeichnet ist. Die Rohdatenkomponente übernimmt den Transport der am Frontend erzeugten Daten an die Umsysteme, wobei die Daten vorzugsweise auf zwei Ebenen gefiltert werden. Die Rohdatenkomponente arbeitet die eingehenden Daten vorzugsweise asynchron ab. Dabei ist für jedes Umsystem ein Port vorgesehen. Innerhalb der Ports werden für verschiedene Vorgänge an den Clients XSLTs geholt und ausgeführt, so dass daraus ein gefiltertes Dokument resultiert, in dem für ein Umsystem Daten mehrerer Vorgänge transformiert sind. Die gefilterten Dokumente werden einer Sammelstelle zugeführt, welche schließlich eine Sammeldatei an einen Port eines Umsystems schickt.

Vor und nach der Übermittlung von Rohdaten an die Rohdatenkomponente durchlaufen die Daten verschiedene der Servicekomponenten des Backends. Vor und nach der Filterung der Daten in der Rohdatenkomponente werden die Daten vorzugsweise durch die Archivkomponente archiviert. Nach der Filterung werden sie einer oder mehreren Komponenten für eine Prüfung der Daten übergeben. Die Verteilung der Daten an die verschiedenen Servicekomponenten erfolgt über die Routing-Komponente 23 der Kommunikationskomponente.

Der erste Filter der Rohdatenkomponente erfüllt Anforderungen an den Datenschutz, indem bestimmte Feldinhalte wie beispielsweise Kreditkartennummern gelöscht werden. Ferner können je nach empfangendem Umsystem weitere Einzeldaten gelöscht werden, welche dem Umsystem nicht übermittelt werden sollen. Die zweite Filterebene kann durch die Umsysteme selbst definiert werden, so dass jedes Umsystem in der Lage ist, Filter zu benennen, die nur die für das Umsystem relevanten Datenbereiche beinhalten. So wird das zu verschickende und vom Umsystem zu verarbeitende Volumen auf ein notwendiges Maß reduziert.

Pro Umsystem wird ein Port definiert, auf welchen die gefilterten Daten geleitet werden. Falls die Umsysteme Einzelsätze verarbeiten können, werden die Daten von den Ports direkt an die Umsysteme geliefert. Fordern die Umsysteme dagegen Datenbündel an, werden die Daten in eine Datenbank geschrieben. Hier werden die Daten beispielsweise so lange gesammelt, bis die Kriterien eines Umsystems in Form von Größe und/oder Zeit erfüllt sind. Die Kriterien werden in der Datenbank von einer Überwachungskomponente überwacht und eine weitere Komponente übernimmt die Bündelung von Datenpaketen. Die Datenpakete werden über die Kommunikationskomponente an die Umsysteme versandt. Gleichzeitig wird vorzugsweise eine Kopie der Liefereinheit an die Archivkomponente gesendet.

Für die Aufbereitung von Daten der Clients und/oder der Umsysteme im Backend und für Aufrufe der beteiligten Systeme an anderen Komponenten muss eine vielfältige Kommunikation der Komponenten untereinander ermöglicht werden. Die Kommunikationskomponente 20 zur Durchführung dieser Kommunikation ist vorzugsweise in zwei Bereiche aufgeteilt, von denen das erste Modul 21 im Bereich der Clients Mittel zur Auswahl umfasst, ob Daten von den Clients auf einem statuslosen oder einem statusbehafteten Übertragungsweg übertragen werden sollen. Der statuslose Weg wird im Folgenden auch als Online-Übertragungsweg bezeichnet, während der statusbehaftete Weg als Offline-Übertragungsweg bezeichnet wird.

Beispielsweise kann es vorgesehen sein, dass Abfragen von einem Client in Datenquellen bestimmter Umsysteme vorzugsweise auf einem Online-Weg durchgeführt werden sollen, damit diese Daten möglichst schnell am Client verfügbar sind. Online-Anfragen können auch als Request bezeichnet werden, der auf eine unmittelbare Antwort wartet. Online-Aufrufe unterstützen somit synchrone Prozesse, da ein Absender nach Absetzen eines Online-Calls auf die Rückkehr der Antwort wartet, bevor die Anwendung die Verarbeitung fortsetzt. Online-Aufrufe können von einem Client beispielsweise über einen Web-Service an die Dialogkomponente übermittelt werden.

Dagegen kann die Verarbeitung und Speicherung von Daten nach der Beendigung eines Geschäftsvorgangs an einem Client auf einem langsameren Offline-Weg erfolgen. Dabei handelt es sich um Nachrichten, die zwar abgeschickt werden, für die aber keine Antwort erwartet wird. Der Absender geht grundsätzlich davon aus, dass die abgeschickten Daten garantiert und in Reihenfolge zugestellt werden. Es handelt sich somit um asynchrone Verfahren, bei dem verschiedene Verarbeitungsprozesse voneinander entkoppelt werden.

Zur Abwicklung fachlicher Daten und zur Implementierung von Business-Logik ist als eine der Servicekomponenten 40 erfindungsgemäß eine Prozesskomponente 44 vorgesehen, welche beispielsweise lang laufende Transaktionen beinhalten kann. Dabei führt die Prozesskomponente P in Verbindung mit anderen Servicekomponenten statusbehaftete Prozesse durch, deren Laufzeit über 30 Sekunden oder bis zu Tagen betragen kann. Dabei handelt es sich beispielsweise um die Vergabe eines Auftrags zur Abholung einer Sendung über eine Internetfiliale. Von der Auftragsvergabe im Internet über die Erzeugung eines Versandaufklebers und die Abrechnung der Dienstleistung vergehen unter Umständen Tage, so dass dieser lang laufende Prozess in der Prozesskomponente abgewickelt wird. Verlangt ein Prozess einen Status, ist es vorteilhaft, ihn stets über die Prozesskomponente abzuwickeln. Die Prozesskomponente 44 ist an die Routing-Komponente 23 der Kommunikationskomponente 20 angeschlossen, welche die Kommunikation der Prozesskomponente mit anderen angeschlossenen Servicekomponenten und den Umsystemen übernimmt.

Statuslose Prozesse werden dagegen über eine Dialogkomponente 45 abgewickelt, welche für einige Prozesse über die Routing-Komponente 23 angesprochen wird, während sie für andere Prozesse über ein eigenes Routing verfügt. Die Routing-Komponente wird angesprochen, wenn Daten auf einem statusbehafteten Offline-Übertragungsweg von den Clients an die Umsysteme übertragen werden sollen, wobei die Abwicklung des Aufrufs von der Prozesskomponente 44 durchgeführt wird. Bei einem reinen statuslosen Online-Aufruf der Dialogkomponente kommt dagegen vorzugsweise das Routing der Dialogkomponente zum Tragen. Über die Dialogkomponente D werden somit vorzugsweise Prozesse abgewickelt, die auf dem schnelleren Online-Weg erfolgen sollen. Dabei übernimmt die Dialogkomponente unterschiedliche Aufgaben mit oder ohne Beteiligung der Umsysteme.

Die Prozesskomponente 44 und die Dialogkomponente 45 sind wesentlich für die getrennte Durchführung von statuslosen und statusbehafteten Aufrufen bzw. Prozessen. Wird von der Kommunikationskomponente 20 im Bereich des Frontends der Online-Weg für die Übertragung von Daten gewählt, werden die Daten von dem ersten Modul 21 an das zweite Modul 22 im Backend übermittelt und dort an die Dialogkomponente 45 übergeben. Nachrichten werden von der Dialogkomponente statuslos bearbeitet, wodurch eine schnelle Kommunikation ermöglicht werden kann, jedoch kein verlässlicher Transport gegeben ist. Über die Dialogkomponente werden daher vorzugsweise Abfragen von Geschäftslogik oder Datenabfragen in den Umsystemen durchgeführt, es wird jedoch keine Verarbeitung von Daten der Clients vorgenommen.

Ein Beispiel für eine möglichst schnell durchzuführende Kommunikation ist daher die Kundenabfrage von einem Client 10 bei einer Vertriebsdatenbank eines Umsystems 30. Eine wichtige Eigenschaft ist hierbei, dass die aufrufende Komponente im Regelfall auf eine Antwort des Umsystems wartet, bevor sie die Verarbeitung fortsetzt. Daher wird bei der Dialogkomponente vorzugsweise von einer kurzen Laufzeit ausgegangen. Um eine schnelle Kommunikation zu gewährleisten, hat es sich ferner als vorteilhaft erwiesen, dass Anfragen, welche zu lange dauern oder scheitern, durch einen Timeout künstlich beendet werden. So kann ein aufrufender Prozess das Scheitern frühzeitig erkennen und entsprechend reagieren.

In einem Ausführungsbeispiel der Erfindung ist es beispielsweise für die Prozesskomponente 44 für bestimmte Prozesse ebenfalls erforderlich, schnell auf Daten in Vertriebsdatenbanken zugreifen zu können. Um dies zu ermöglichen, kann die Dialogkomponente in diesen Fällen mit der Routing-Komponente 23 verbunden sein. So können quasi alle Servicekomponenten 40 des Backends auf die Dialogkomponente zugreifen, um Online-Aufrufe in angeschlossenen Umsystemen zu machen. Die Dialogkomponente 45 kann ferner von Korrektur- oder Recherche-Clients über Web-Services aufgerufen werden.

Von der Dialogkomponente können vorzugsweise wenigstens drei Arten von Aufrufen durchgeführt werden. Zum einen können Aufrufe erfolgen, welche ausschließlich die Businesslogik der Dialogkomponente nutzen. Die Businesslogik ist in der Dialogkomponente hinterlegt und kommt ohne Aufrufe bei Umsystemen aus. Die Logik kann ein komplexer Algorithmus sein, der aufgrund sich stetig verändernder Parameter nicht fest im Frontend hinterlegt werden sollte. Dabei handelt es sich beispielsweise um eine Zinsberechnungskomponente, die nach einer einheitlichen Formel für alle Anwendungen Zinsberechnungen durchführt. Aufrufe an Umsystemen sind dabei nicht erforderlich.

Zum anderen kann die Dialogkomponente Aufrufe in Form eines einfachen Durchreichens von Daten an ein Umsystem durchführen. Hierbei liegt keine Logik im Aufruf selbst vor, sondern die Dialogkomponente leitet den Aufruf lediglich an ein Umsystem weiter. Dabei kann es sich beispielsweise um das Heraussuchen eines bestimmten Kundensatzes aus einer Datenbank handeln.

Darüber hinaus können Aufrufe aus Logik und Umsystemaufrufen, sowie aus mehreren Umsystemaufrufen bestehen. Solche komplexen Vorgänge werden vorzugsweise von einer Serviceschicht innerhalb der Dialogkomponente abgehandelt. Innerhalb der Serviceschicht befindet sich die gesamte Funktionalität zur Abwicklung des Aufrufs. Über einen einzelnen Aufruf eines Clients an der Dialogkomponente kann so eine beliebig große Kaskade von Aufrufen in unterschiedlicher Abhängigkeit erfolgen. So können beispielsweise Kundendaten aus mehreren Datenbanken abgefragt, entsprechend zusammengestellt und als eine Einheit an den Client im Frontend geleitet werden. Dabei behält die Dialogkomponente keine Daten und kann bestimmte Prozesse nach dem Ablauf einer definierten Zeitspanne wieder verwerfen.

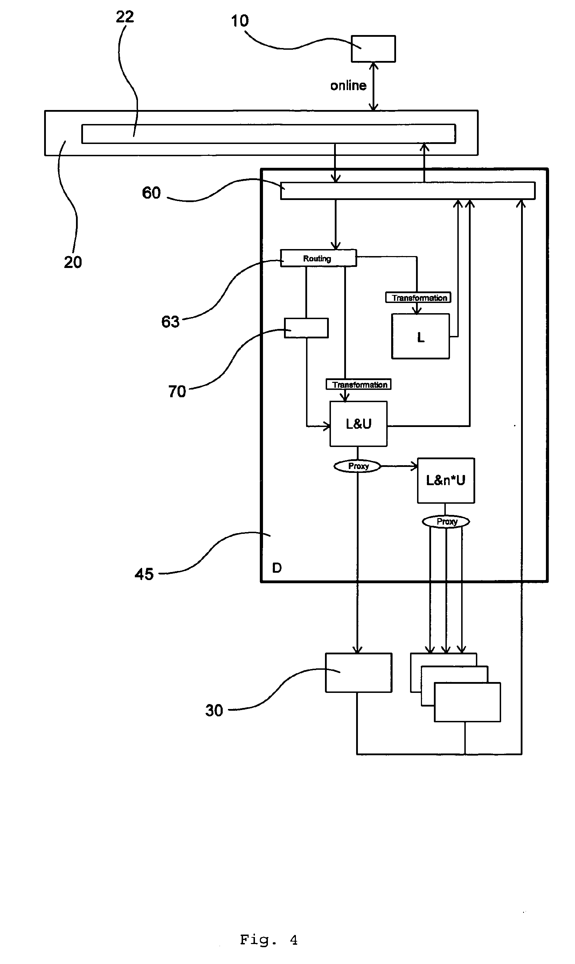

Die Verfahrensschritte bei den verschiedenen genannten Online-Aufrufen und die daran beteiligten Funktionskomponenten der Dialogkomponente 45 sind in Fig. 4 schematisch dargestellt. Erfolgt ein Aufruf durch einen Client 10, wird im ersten Modul der Kommunikationskomponente 20 der Online-Übertragungsweg festgelegt. Der Aufruf geht dann vorzugsweise über einen Web-Service an die Dialogkomponente 45.

Die Nachrichten werden nun an eine Routingschicht 63 innerhalb der Dialogkomponente übergeben. Innerhalb dieser Routingschicht 63 erfolgt die Entscheidung, welcher der drei genannten Aufruftypen zum Tragen kommt. Ferner wird das jeweils passende Protokoll für den eigentlichen Aufruf an ein Umsystem festgelegt. Die Dialogkomponente 45 umfasst ferner eine Transformationsschicht, welche die Aufgabe hat, ankommende Daten im Datenmodell des Clients in das für das Umsystem passende Datenmodell zu transformieren.

Handelt es sich bei dem Aufruf um einen Aufruf einer einfachen Logik, werden die Daten transformiert und gehen von der Routingschicht 63 direkt an ein Logik-Modul, das in der Fig. 4 mit "L" bezeichnet ist. Das Modul kann aus einer unterschiedlich komplex zusammengesetzten Logik bestehen und nach der Bearbeitung der Anfrage durch die Businesslogik werden die Daten über die Kommunikationskomponente an den Client zurückgegeben.

Der Datenfluss bei einer einfachen Frage an ein Umsystem sieht vorzugsweise vor, dass die Daten von der Routingschicht 63 einem Logik&Umsystem-Modul mit der Bezeichnung "L&U" übergeben werden. Das Modul L&U erkennt, dass es sich um eine einfache Anfrage handelt und die Daten werden beispielsweise über einen Proxy an das Umsystem geleitet. Die Antwort gelangt vorzugsweise über die Schnittstelle zur Kommunikationskomponente an den Client.

Ein vielschichtiger Aufruf, der Logik und einen oder mehrere Umsystemaufrufe umfasst, wird vorzugsweise über ein Modul mit der Bezeichnung "L&n*U" abgewickelt. Die Daten werden in der Regel auch hier transformiert und die Anfrage gelangt zuerst zum Modul L&U für Logik und Umsystem. Dieses Modul erkennt, dass der Aufruf an das Servicemodul L&n*U weitergeleitet werden muss. Über einen Proxy wird so die entsprechende Serviceschicht angesprochen. Innerhalb dieser Schicht werden die notwendigen Aufrufe an die Umsysteme vorzugsweise ebenfalls über einen Proxy abgewickelt. Auch hier erfolgt die Übermittlung der Antwort vorzugsweise über die Schnittstelle zur Kommunikationskomponente an den Client, auch wenn dies in der Abbildung zur Vereinfachung nicht explizit dargestellt ist.

Wird von der Kommunikationskomponente im Bereich des Frontends der Offline-Weg für die Übertragung von Daten gewählt, wird über die Routing-Komponente 23 die Prozesskomponente 44 angesprochen. Zur Erfüllung der Anforderungen an die Verarbeitung von Daten nach den Grundsätzen der ordnungsmäßigen Buchführung (GoB) bzw. der ordnungsmäßigen DV-gestützten Buchführungssysteme (GoBS), ist es zweckmäßig, dass alle Datensätze erst von der Archivkomponente A archiviert werden, bevor sie von der Prozesskomponente bearbeitet werden. Die Routing-Komponente 23 ermöglicht dabei sowohl die serielle als auch die parallele Bearbeitung von Datensätzen.

Je nach Art des Aufrufs eines Clients werden die Daten von den an die Routing-Komponente angeschlossenen Servicekomponenten verarbeitet und an die Umsysteme übergeben. Dabei wird von dem Client keine Antwort erwartet, durch die Führung eines Status wird jedoch ein verlässlicher Transport gewährleistet.

Bei den von der Prozesskomponente 44 durchgeführten statusbehafteten Prozessen handelt es sich typischerweise um Prozesse, die wenigstens zweigeteilt sind. Ein erster initiierender Teil findet am Client im Frontend statt, wobei bestimmte Aufträge angenommen und gestartet werden. Ein Beispiel hierfür könnte der Verkauf eines Mobiltelefons sein, dessen Gesamtprozess mit der Erfassung der Auftragsdaten und der Auftragsabgabe nicht abgeschlossen ist. Vielmehr muss nun eine Freischaltung vorgenommen werden, das Mobiltelefon wird möglicherweise einem Transportlogistiker übergeben und wird ausgeliefert. All dies geschieht im Hintergrund, ohne dass es eines weiteren Eingriffs bedarf. Vielmehr laufen die entsprechenden Schritte nach einem vorgegebenen Schema ab und müssen lediglich in der richtigen Reihenfolge initiiert werden.

Die Prozesskomponente stellt dabei eine technische Plattform bereit, die es ermöglicht, neue fachliche Prozesse allein durch Konfiguration zu realisieren. Insbesondere stellt die Komponente vorzugsweise alle notwendigen Werkzeuge bereit, damit bei neuen Prozessen keine Programmierung im klassischen Sinne anfällt. Der Status eines Prozesses wird in der Prozesskomponente 44 solange gehalten, bis der Prozess abgeschlossen ist. Darüber hinaus werden keine Daten behalten.
Da die Prozesskomponente 44 an die Kommunikationskomponente 20 angeschlossen ist, hat sie über diesen Weg im Bedarfsfall auch Zugriff auf die Dialogkomponente 45.

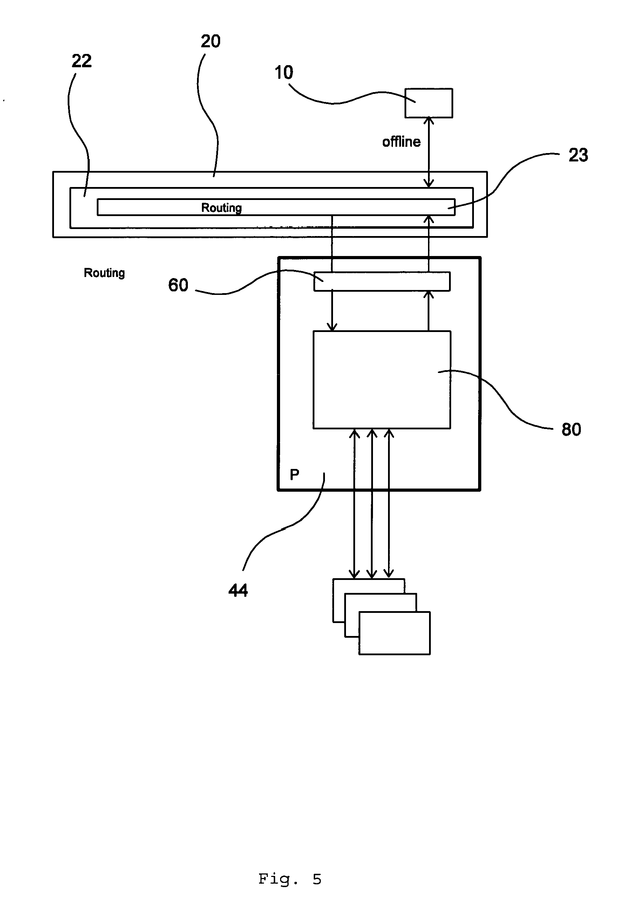

Ein besonders bevorzugtes Ausführungsbeispiel einer Prozesskomponente und ihrer einzelnen Funktionsbereiche ist in Fig. 5 dargestellt. Eine Nachricht wird von der Routing-Komponente 23 an eine Schnittstelle 60 der Prozesskomponente übergeben und die Nachricht wird daraufhin einem Container 80 übergeben, der beispielsweise durch ein Messaging System gebildet werden kann. Bei dem Messaging System kann es ich ebenfalls um den BizTalk Server von Microsoft handeln. Durch das Messaging System wird eine Anbindung an unterschiedliche Schnittstellen ermöglicht und durch die Orchestrierung des Messaging Systems können beliebig komplexe Prozesse ohne Programmieraufwand aufgesetzt werden.

Nachrichten werden dem Messaging System übergeben und vorzugsweise in dessen eigener Warteschlange hinterlegt. Von hier aus läuft die Verarbeitung innerhalb des Containers 80 ab, wobei beispielsweise eine Processing Engine die Nachrichten automatisch an die entsprechenden Prozesse übergibt. Dabei kann eine beliebige Anzahl gleichartiger oder unterschiedlicher Prozesse parallel gehandhabt werden. Ferner können die einzelnen Prozesse jederzeit über die Kommunikationskomponente mit anderen Servicekomponenten kommunizieren. Die Prozesskomponente 44 wickelt so gegebenenfalls im Zusammenspiel mit anderen Servicekomponenten und Umsystemen einen statusbehafteten Prozess ab.

Dabei kann die Routing-Komponente 23 der Kommunikationskomponente 20 ein beliebiges Routing unterstützen. Beispielsweise könnte das Frontend eine Nachricht an das Backend schicken mit der Routinginformationen (*A,P,R). Die Routing-Komponente würde die Nachricht wie folgt interpretieren: Sende Daten an Archivkomponente A und warte bis A eine Bestätigung gibt (gekennzeichnet durch *). Sende danach an die Prozesskomponente P und parallel an die Rohdatenkomponente R. Ein weiteres Routing (P,Q1,R,D) könnte dagegen bedeuten, eine Nachricht parallel an P, Q1, R und D zu schicken. Auch komplexere Routings wie (*(A,P),R,D) sind denkbar, bei denen das Routing Daten an A und P parallel schickt und erst nach der Bestätigung durch diese beiden Komponenten parallel an R und D schickt.

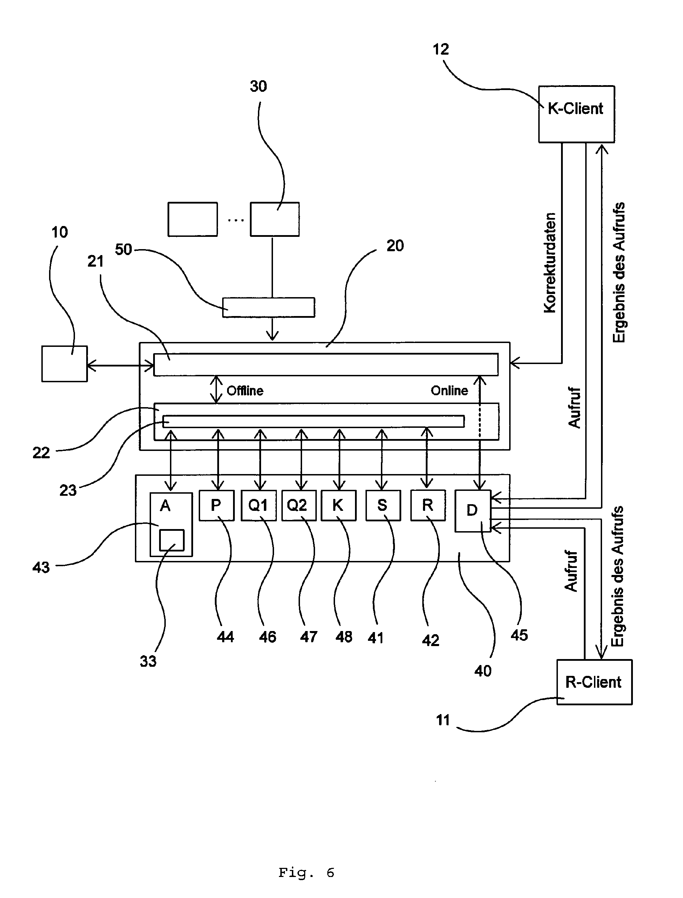

In einem besonders bevorzugten Ausführungsbeispiel der Erfindung wird die erfindungsgemäße Anordnung durch eine Korrekturkomponente 48 ergänzt, welche in der Fig. 6 auch mit K bezeichnet ist. Die Korrekturkomponente ist verantwortlich für die Abwicklung aller fachlich notwendigen Korrekturen an buchungsrelevanten Datensätzen und Vorgängen. Als Quellen, welche der Korrekturkomponente Fehler melden, kommen beispielsweise die Umsysteme 30 in Betracht, falls diese fehlerhafte Rohdatensätze geliefert bekommen haben. Fehlermeldungen kommen ferner von verschiedenen Prüf- und Verarbeitungseinheiten innerhalb der Servicekomponenten. Das Korrekturmanagement hat zum Ziel, durch eine zeitgerechte Korrektur fehlerhafter Datensätze die Arbeit der Servicekomponenten 40 und der daran angeschlossenen Umsysteme zu unterstützen und eine fehlerfreie Arbeit des Gesamtsystems zu ermöglichen. Dabei sollen sämtliche Korrekturen so erfolgen, dass die GoB- und GoBS-Konformität des Gesamtsystems gewährleistet ist.

Neben wenigstens einem Recherche-Client 11 und mehreren Clients 10, an denen Vorgänge bei der Abwicklung von Geschäften mit Kunden durchgeführt werden, umfasst die Anordnung in diesem Ausführungsbeispiel ferner wenigstens einen Korrektur-Client 12. Beispielsweise können eine Vielzahl von Korrektur-Clients an verschiedenen Standorten des Filialsystems angeordnet sein, wodurch die Korrekturaufgaben z.B. an Bereiche mit unterschiedlichen Kompetenzen verteilt werden können.

Ein Korrektur-Client 12 ist vorzugsweise so ausgebildet, dass er Daten visualisieren und für die Korrektur übernehmen kann. Ferner umfasst er Mittel zum Einstellen korrigierter Datensätze in das System. Vorzugsweise wird keine Kommunikation zwischen einzelnen Korrektur-Clients ermöglicht. Gleiche Daten können von mehreren Clients geladen und visualisiert werden. Die Bearbeitung eines speziellen Datensatzes durch mehrere Korrektur-Clients wird jedoch zweckmäßigerweise verhindert. In einem besonders bevorzugten Ausführungsbeispiel der Erfindung kann ein Korrektur-Client 12 auf dem gleichen Rechner betrieben werden wie ein Recherche-Client, da beide über ähnliche Funktionen für den Zugriff und die Verarbeitung von Daten der Archivkomponente verfügen müssen.

Neben der Korrekturkomponente 48 umfassen die Servicekomponenten 40 des Backends vorzugsweise wenigstens eine Sessionkomponente 46, welche in Fig. 6 mit Q1 bezeichnet ist. Die Sessionkomponente empfängt beispielsweise die Rohdatensätze der Clients nach ihrer Archivierung durch die Archivkomponente 43, führt eine formale Syntaxprüfung durch und fasst die geprüften Datensätze zu definierten Gruppen zusammen. Diese Gruppen aus mehreren Datensätzen können auch als Session bezeichnet werden, wobei an den jeweiligen Frontends beliebige Sessions definiert werden, welche die Sessionkomponente aus den eingehenden Datensätzen zusammenstellt. Eine mögliche Session besteht beispielsweise aus den Daten zwischen den Zeitpunkten einer Kassenöffnung und eines Kassenschlusses an einem Frontend. Eine solche Kassensession wird im Folgenden auch als Journal bezeichnet. Ferner sind andere Sessioneinheiten wie Kundensessions oder Vorgangssessions möglich. Die Sessionkomponente prüft die vollständigen Sessions vorzugsweise auf satz-, session- und sessionübergreifender Ebene. Bei Fehlern findet eine automatische Aussteuerung in die Korrekturkomponente 48 statt.

Die Sessionkomponente 46 erfüllt den Anspruch, dass ausschließlich geprüfte und vollständig richtige Sessions die Komponente verlassen und an die Umsysteme oder eine andere Komponente im Backend gesendet werden. Die Prüfung schließt dabei unter anderem eine Reihe von GoB-Anforderungen ein.

Die Übertragung der durch die Sessionkomponente geprüften Daten erfolgt über die Kommunikationskomponente 20 und als Empfänger der Daten kommen wiederum die Archivkomponente 43, die Rohdatenkomponente 42, die Korrekturkomponente 48 und/oder eine Abstimmungskomponente 47 in Betracht. Die Daten werden für spätere Rückgriffe in das Archiv eingelagert und die Rohdatenkomponente 42 kann die Daten so filtern, dass sie strukturiert den Umsystemen zugeführt werden können.

Die Abstimmungskomponente 47 ist in Fig. 6 mit Q2 bezeichnet und übernimmt die Vorverarbeitung und Abstimmung für das Rechnungswesen des gesamten Retailsystems. Die Abstimmungskomponente erhält die geprüften Sessions der Sessionkomponente 46 und nimmt eine Abstimmung und Kumulation der Daten vor. Sie bildet Summen, nimmt semantische Korrektheitsprüfungen vor und aggregiert Daten.

Sind alle Rohdatensätze einer Session transformiert und kumuliert, findet eine Abstimmung statt. Die Abstimmungskomponente stellt somit sicher, dass zu verbuchende Daten gleiche Buchungswerte auch bei unterschiedlicher Zusammensetzung tragen. Die vorzugsweise im XML-Format vorliegenden und als Session verpackten Daten werden vorzugsweise in einer für den Empfänger buchbaren Struktur aufbereitet.

Werden von der Sessionkomponente 46 oder der Abstimmungskomponente 47 Datensätze als fehlerhaft erkannt, werden sie der Korrekturkomponente 48 übergeben. Dabei hat es sich als vorteilhaft erwiesen, dass die Verarbeitung eines fehlerhaften Datensatzes durch die Korrekturkomponente bis zur Beendigung der Korrektur unterbrochen wird. Die Fehlerbehebung erfolgt vorzugsweise im Datensatz selbst und/oder es kann eine Korrektur der prüfenden Einheiten eingeleitet werden. Da innerhalb der Korrekturkomponente insbesondere buchhalterische Kriterien verwirklicht sind, wird ein fehlerhafter Datensatz zweckmäßigerweise nicht verändert, sondern zur Speicherung an die Archivkomponente 43 übermittelt. Die Korrekturkomponente 48 erzeugt einen neuen Datensatz mit der gleichen Routinginformation wie der fehlerhafte Datensatz. Der neue Datensatz erhält eine Referenz auf den alten Datensatz und die erforderliche Fehlerkorrektur. Dabei müssen vorzugsweise keine vollständigen Sessions bzw. Journale korrigiert werden, sondern die Korrektur einzelner Datensätze ist möglich.

Neben fehlerhaften Datensätzen der Sessionkomponente 46 und der Abstimmungskomponente 47 können der Korrekturkomponente auch Datensätze aus anderen Systemkomponenten übermittelt werden. Vorteilhaft ist beispielsweise, dass Datensätze, welche von den Umsystemen beanstandet wurden, ebenfalls in der Korrekturkomponente korrigiert werden können.

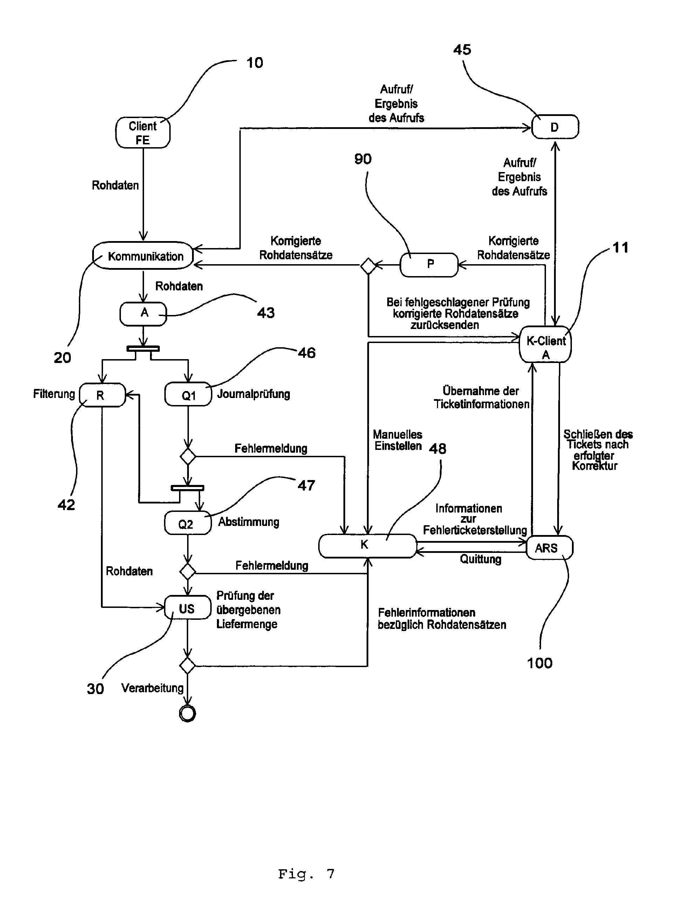

Die Verfahrensabläufe bei der Abwicklung eines Korrekturauftrags durch die Korrekturkomponente 48 sind beispielhaft in Fig. 7 dargestellt. An einem Client 10 erzeugte Rohdaten werden über die Routing-Komponente 23 der zentralen Kommunikationskomponente 20 an die Servicekomponenten des Backends übergeben und vorzugsweise zuerst durch die Archivkomponente 43 archiviert. Die Rohdaten gelangen dann für eine Filterung zur Rohdatenkomponente 42 und zur Journalbildung und -prüfung in die Sessionkomponente 46. Stellt die Sessionkomponente einen fehlerhaften Datensatz fest, sendet sie eine Fehlermeldung an die Korrekturkomponente 48. Auch wenn dies in der Fig. 7 nicht explizit dargestellt ist, erfolgt die Übermittlung dieser Fehlermeldung vorzugsweise ebenfalls über die Routing-Komponente 23.

In der Sessionkomponente erstellte und geprüfte Journale werden ebenfalls über die Kommunikationskomponente 20 der Rohdatenkomponente 42 und der Abstimmungskomponente 47 übergeben. In der Abstimmungskomponente erfolgt eine Abstimmung der Journale, wobei bei Fehlern eine Fehlermeldung an die Korrekturkomponente übermittelt wird. Die mit Rohdaten belieferten Umsysteme 30 geben gegebenenfalls ebenfalls Fehlermeldungen an die Korrekturkomponente 48. In einem Ausführungsbeispiel der Erfindung geben die Umsysteme Fehlermeldungen nicht an die Korrekturkomponente, sondern direkt an eine Auftragsvergabekomponente 100 zur Erzeugung von Korrekturaufträgen.

Die Korrekturkomponente 48 liefert die Fehlermeldung ebenfalls an die Auftragsvergabekomponente 100, die beispielsweise durch ein Action Request System (ARS) gebildet werden kann. Die Korrekturkomponente veranlasst dort das Anlegen eines Tickets mit einem initialen Anfangs-Status (z.B. "offen"). Die Auftragsvergabekomponente umfasst ein Ticketing-System, das zur Zuweisung und Steuerung von Arbeitsaufträgen genutzt wird. Es wird genutzt, um Korrekturaufträge entgegenzunehmen und deren Bearbeitung zu dokumentieren, auch um Korrekturaufträge an andere organisatorische Einheiten weiterzuleiten. Jede Verarbeitungs- und Zustandsänderung während der Bearbeitung des Tickets wird aus dem Korrektursystem an das ARS übergeben. ARS übergibt dann automatisch diese Informationen an die Korrekturkomponente 48 zur Synchronisierung (z.B. von "offen" auf "in Bearbeitung"). Nach Annahme des Tickets durch einen Mitarbeiter des Korrekturmanagements beispielsweise an einem Korrektur-Client 11 folgt die automatische Einarbeitung aller Informationen des betrachteten Tickets in das Korrekturmanagement.

Für die Analyse des Fehlers müssen zusätzlich zu den im Fehlerticket enthaltenen Informationen weitere Daten herangezogen werden, so dass für die Korrektur-Clients ein lesender Zugriff auf Datenbanken des Systems ermöglicht werden muss. Bei einer solchen Recherche im Rahmen des Korrekturprozesses wird somit auf verschiedene Systeme zugegriffen und der Zugriff erfolgt vorzugsweise möglichst zeitnah. Dadurch ist gewährleistet, dass der Vorgang der Übermittlung Korrektur-relevanter Daten den Korrekturprozess zeitlich nicht beeinträchtigt.

Dabei ist zu berücksichtigen, dass die Korrektur auf fehlerhaften Rohdatensätzen erfolgt und nicht auf Journalen. Die Korrektur-Clients lesen die fehlerhaften Datensätze aus dem Archiv aus, greifen auf Korrekturanweisungen zu und korrigieren den fehlerhaften Datensatz.

Vor der Einstellung der Korrekturen in das System können die korrigierten Rohdatensätze einer Prüfkomponente 90 übermittelt werden. Die Prüfkomponente führt eine Vorprüfung durch, indem die normale Verarbeitung simuliert und damit die Richtigkeit und Vollständigkeit der Korrektur bestätigt wird. Dabei wendet die Prüfkomponente vorzugsweise die gleichen Regeln an wie die Session- und Abstimmungskomponente. Es hat sich jedoch nicht als zweckmäßig erwiesen, die Prüfung in den beiden Komponenten selbst durchzuführen, sondern eine eigenständige Komponente mit der gleichen Regelbasis wie die Session- und Abstimmungskomponente ist vorteilhaft. Als Antwort auf den Prüfantrag sendet die Prüfkomponente das Ergebnis der Prüfung unter Hinweis auf den Auftrag an den Korrektur-Client zurück. Nach erfolgreicher Prüfung durch die Prüfkomponente P werden die korrigierten Daten an die Servicekomponenten des Backends übergeben. Zusätzlich wird die gesamte Korrekturdokumentation eingeliefert und beides durch die Archivkomponente archiviert.

In einem besonders bevorzugten Ausführungsbeispiel der Erfindung greift ein Korrektur-Client 12 über einen Web-Service auf die Dialogkomponente 45 zu, um einen statuslosen Online-Zugriff auf die Daten eines Umsystems oder des Archivs zu ermöglichen, in welchem Korrektur-relevante Daten hinterlegt sind. Zu den Umsystemen zählen in diesem Zusammenhang jegliche Archive und/oder Datenbanken, in denen Daten durch die Archivkomponente 43 oder andere Komponenten hinterlegt wurden.

Die Dialogkomponente 45 ermöglicht somit einen Zugriff auf fehlerhafte Datensätze für ein Korrekturmanagement. Die Dialogkomponente hostet dabei für den Korrektur-Client 12 den Web-Service für einen Korrekturauftrag, über den der Client arbeitet. Der Web-Service stellt vorzugsweise Methoden für Funktionen wie das Anlegen, Suchen, Laden und Aktualisieren bereit. In einem besonders bevorzugten Ausführungsbeispiel der Erfindung erfolgt die Erzeugung einer eindeutigen Identifikation für einen Korrekturauftrag ebenfalls durch die Serviceschicht der Dialogkomponente 45. Diese beantragt dazu eine ARS-Ticketnummer bei der Auftragsvergabekomponente 100 und generiert damit die Korrekturauftrag-ID. Des Weiteren werden von der Dialogkomponente Attribute aus dem Fehlerprotokoll extrahiert. Die Korrekturauftrag-ID und die extrahierten Merkmale des Fehlerprotokolls werden in eine Datenbank der Dialogkomponente eingestellt.

### Bezugszeichenliste:

- 10: Client, Frontend
- 11: Recherche-Client, R-Client
- 12: Korrektur-Client, K-Client
- 20: Kommunikationskomponente
- 21: Erstes Modul der Kommunikationskomponente
- 22: Zweites Modul der Kommunikationskomponente
- 23: Routing-Komponente des zweiten Moduls der Kommunikationskomponente
- 30: Umsystem
- 31: Langzeitarchiv
- 32: Kurzzeitarchiv
- 33: Archiv
- 40: Servicekomponenten des Backends
- 41,S: Datenbereitstellungskomponente
- 42,R: Rohdatenkomponente
- 43,A: Archivkomponente
- 44,P: Prozesskomponente
- 45,D: Dialogkomponente
- 46,Q1: Sessionkomponente
- 47,Q2: Abstimmungskomponente
- 48,K: Korrekturkomponente
- 49,E: Einlieferungskomponente
- 50: Sicherheitsschicht
- 60: Schnittstelle zu Servicekomponente
- 63: Routingschicht einer Servicekomponente
- 70: Persistenzmedium einer Servicekomponente
- 80: Container, Messaging System der Prozesskomponente
- 90: Prüfkomponente des Korrekturmanagements
- 100: Auftragsvergabekomponente, Action Request System - ARS
- 110: Datei eines Umsystems im Format des Umsystems
- 111: Update-Datennachricht im Format der Datenbank der Datenbereitstellungskomponente
- 112: Update-Datenpaket
- 113: Datendatei im XML-Format
- 114: Steuerdatei im XML-Format
- 120: Umsystem zur Lieferung von Filialdaten
- 130: Übergabeschnittstelle zu Datenbereitstellungskomponente, Fileshare
- 140: Steuerungsmodul, Steuerungskomponente, Messaging System
- 150: Vorverarbeitungskomponente
- 151: Mapping-Komponente
- 160: Datenbank der Datenbereitstellungskomponente
- 170: Ausgangsschnittstelle
- 180: Verteilsteuerungskomponente
- 190: Pflegetool

## Patentansprüche

1. Anordnung von Vorrichtungen zum Betrieb eines computergestützten Filialsystems, wobei ein Frontend des Filialsystems mehrere Clients (10) umfasst, während ein Backend wenigstens durch mehrere Servicekomponenten (40) gebildet wird, und das Backend über eine Kommunikationskomponente (20) in kommunikativer Verbindung mit den Clients (10) und einem oder mehreren Umsystemen (10) steht, wobei die Kommunikationskomponente (20) funktional in wenigstens zwei Bereiche aufgeteilt ist und ein erstes Modul (21) dem Client (10) zuzuordnen ist, während ein zweites Modul (22) dem Backend zuzuordnen ist,
**dadurch gekennzeichnet,**
**dass** das zweite Modul (22) der Kommunikationskomponente (20) eine Routing-Komponente (23) umfasst, welche Mittel zur Nachrichtenübermittlung zwischen wenigstens folgenden Servicekomponenten des Backends aufweist:
- Rohdatenkomponente (42), umfassend Mittel zur Filterung von Daten und zur Übermittlung der gefilterten Daten an Umsysteme (30) ;
- Archivkomponente (43), umfassend Mittel zur Archivierung von Daten in einem Archiv (33);
- Prozesskomponente (44), umfassend Mittel zur Verarbeitung von statusbehafteten Aufrufen der Clients (10); und
- Dialogkomponente (45), umfassend Mittel zur Verarbeitung von statuslosen Aufrufen der Clients (10).

2. Anordnung nach Anspruch 1,
**dadurch gekennzeichnet,**
**dass** die Anordnung eine Datenbereitstellungskomponente (41), umfassend Mittel zur Bereitstellung von Daten der Umsysteme (30) für die Clients (10) aufweist.

3. Anordnung nach einem oder beiden der Ansprüche 1 und 2,
**dadurch gekennzeichnet,**
**dass** das Archiv (33) ein Kurzzeitarchiv (32) in Form einer Datenbank und ein Langzeitarchiv (31) in Form eines CAS-basierten Datenspeichersystems umfasst.

4. Anordnung nach einem oder mehreren der Ansprüche 1 bis 3,
**dadurch gekennzeichnet,**
**dass** die Routing-Komponente (23) wahlweise Mittel zur seriellen und parallelen Verteilung von Nachrichten an die Servicekomponenten (40) umfasst.

5. Anordnung nach einem oder mehreren der Ansprüche 1 bis 4,
**dadurch gekennzeichnet,**
**dass** die Anordnung einen Recherche-Client (11) umfasst, der über einen Web-Service Zugriff auf die Dialogkomponente (45) hat, wobei die Dialogkomponente (45) Mittel zur Durchführung von Zugriffen auf das Archiv (33) und/oder Datenbanken der Umsysteme (30) aufweist.

6. Anordnung nach einem oder mehreren der Ansprüche 1 bis 5,
**dadurch gekennzeichnet,**
**dass** die Servicekomponenten (40) jeweils über eine Schnittstelle (60) zur Kommunikationskomponente (20) verfügen.

7. Anordnung nach einem oder mehreren der Ansprüche 1 bis 6,
**dadurch gekennzeichnet,**
**dass** die Anordnung folgende Servicekomponenten umfasst:
- Sessionkomponente (46), umfassend Mittel zur Bildung von Gruppen (Sessions) aus mehreren Datensätzen;
- Abstimmungskomponente (47), umfassend Mittel zur Kumulation und Abstimmung von durch die Sessionkomponente (46) gebildeten Gruppen aus Datensätzen;
- Korrekturkomponente (48), umfassend Mittel zur Korrektur von fehlerhaften Datensätzen;
- wobei die Sessionkomponente (46), die
Abstimmungskomponente (47) und/oder Umsysteme (30) Mittel zur Erzeugung von Fehlermeldungen und zur Übermittlung einer Fehlermeldung an die Korrekturkomponente (48) aufweisen.

8. Anordnung nach Anspruch 7,
**dadurch gekennzeichnet,**
**dass** die Anordnung wenigstens einen Korrektur-Client (12) umfasst, der Mittel zum Empfang von Korrekturaufträgen der Korrekturkomponente (48) umfasst.

9. Anordnung nach Anspruch 8,
**dadurch gekennzeichnet,**
**dass** der Korrektur-Client (12) Mittel zum Zugriff auf die Dialogkomponente (45) über einen Web-Service hat.

10. Verfahren zum Betrieb eines computergestützten Filialsystems, wobei ein Frontend des Filialsystems mehrere Clients (10) umfasst, während ein Backend wenigstens durch mehrere Servicekomponenten (40) gebildet wird, und das Backend über eine Kommunikationskomponente (20) mit den Clients (10) und einem oder mehreren Umsystemen (10) kommuniziert, wobei die Kommunikationskomponente (20) funktional in wenigstens zwei Bereiche aufgeteilt ist und ein erstes Modul (21) dem Client (10) zuzuordnen ist, während ein zweites Modul (22) dem
Backend zuzuordnen ist,
**dadurch gekennzeichnet,**
**dass** eine Routing-Komponente (23) des zweiten Moduls (22) der Kommunikationskomponente (20) die Nachrichtenübermittlung bei der Aufbereitung und Weiterleitung von Daten übernimmt, wobei wenigstens die Verfahrensschritte der folgenden Servicekomponenten durchgeführt werden:
- Filterung von an den Clients (10) erzeugten Daten und Übermittlung der gefilterten Rohdaten an Umsysteme (30) durch eine Rohdatenkomponente (42);
- Archivierung von Daten in einem Archiv (33) durch die Archivkomponente (43);
- Verarbeitung von statusbehafteten Aufrufen der Clients (10) durch eine Prozesskomponente (44); und
- Verarbeitung von statuslosen Aufrufen der Clients (10) durch eine Dialogkomponente (45).

11. Verfahren nach Anspruch 10,
**dadurch gekennzeichnet,**
**dass** das Verfahren den Schritt der Bereitstellung von Daten der Umsysteme (30) für die Clients (10) durch eine Datenbereitstellungskomponente (41) umfasst.

12. Verfahren nach einem oder beiden der Ansprüche 10 und 11,
**dadurch gekennzeichnet,**
**dass** wenigstens ein Recherche-Client (11) auf Daten des Archivs (33) und/oder der Umsysteme (30) zugreift.

13. Verfahren nach Anspruch 12,
**dadurch gekennzeichnet,**
**dass** der Zugriff über einen Web-Service und die Dialogkomponente (45) erfolgt.

14. Verfahren nach einem oder mehreren der Ansprüche 10 bis 13,
**dadurch gekennzeichnet,**
**dass** die Routing-Komponente (23) Nachrichten wahlweise seriell und parallel an die Servicekomponenten (40) verteilt.

15. Verfahren nach einem oder mehreren der Ansprüche 10 bis 14,
**dadurch gekennzeichnet,**
**dass** das Verfahren folgende Schritte umfasst:
- Bildung von Gruppen (Sessions) aus mehreren Datensätzen durch eine Sessionkomponente (46);
- Kumulation und Abstimmung von durch die Sessionkomponente (46) gebildeten Gruppen aus Datensätzen durch eine Abstimmungskomponente (47);
- Korrektur von fehlerhaften Datensätzen durch eine Korrekturkomponente (48);
- Erzeugung von Fehlermeldungen und Übermittlung einer Fehlermeldung an die Korrekturkomponente (48) durch die Sessionkomponente (46), die Abstimmungskomponente (47) und/oder Umsysteme (30).

16. Verfahren nach Anspruch 15,
**dadurch gekennzeichnet,**
**dass** ein Korrektur-Client (12) Korrekturaufträge von der Korrekturkomponente (48) empfängt.

17. Verfahren nach Anspruch 16,
**dadurch gekennzeichnet,**
**dass** der Korrektur-Client (12) über einen Web-Service auf die Dialogkomponente (45) zugreift, welche einen Zugriff in dem Archiv (33) und/oder Datenbanken der Umsysteme (30) durchführt.
